# EUROPEAN PATENT SPECIFICATION

(11) **EP 4 496 417 B1**
(45) Date of publication and mention of the grant of the patent: **12.08.2026**
(21) Application number: 23771046.2
(22) Date of filing: 13.03.2023
(51) Int. Cl.: H04L 1/08, H04W 56/00, H04W 74/00, H04W 74/0833, H04W 74/08, H04W 72/23, H04W 72/04, H04W 72/12, H04W 84/06

(54) **METHOD AND APPARATUS FOR PERFORMING UPLINK TRANSMISSION AND RECEPTION IN WIRELESS COMMUNICATION SYSTEM**
VERFAHREN UND VORRICHTUNG ZUR DURCHFÜHRUNG VON UPLINK-ÜBERTRAGUNG UND -EMPFANG IN EINEM DRAHTLOSKOMMUNIKATIONSSYSTEM
PROCÉDÉ ET APPAREIL POUR EFFECTUER UNE ÉMISSION ET UNE RÉCEPTION EN LIAISON MONTANTE DANS UN SYSTÈME DE COMMUNICATION SANS FIL

(30) Priority: 15.03.2022 KR 20220032247
(43) Date of publication of application: 22.01.2025
(73) Proprietor: LG Electronics Inc., Yeongdeungpo-gu Seoul 07336 (KR)
(72) Inventor: SHIN, Seokmin, Seoul 06772 (KR); PARK, Haewook, Seoul 06772 (KR); KO, Hyunsoo, Seoul 06772 (KR); YANG, Suckchel, Seoul 06772 (KR); KIM, Seonwook, Seoul 06772 (KR)
(74) Representative: Maikowski & Ninnemann Patentanwälte Partnerschaft mbB
(86) International application number: PCT/KR2023/003344
(87) International publication number: WO 2023/177167

(56) References cited:
- EP-A1- 3 879 738
- WO-A1-2021/054726
- CN-A- 111 989 976
- KR-A- 20190 107 151
- US-A1- 2021 058 971
- ERICSSON: "On time and frequency synchronization enhancements for IoT NTN", vol. RAN WG1, no. e-Meeting; 20211111 - 20211119, 5 November 2021 (2021-11-05), XP052074244, Retrieved from the Internet <URL:https://ftp.3gpp.org/tsg_ran/WG1_RL1/TSGR1_107-e/Docs/R1-2111420.zip R1-2111420 On time and frequency synchronization enhancements for IoT NTN.docx> [retrieved on 20211105]
- HUAWEI ET AL: "Discussion on time and frequency synchronization enhancement for IoT in NTN", vol. RAN WG1, no. e-Meeting; 20211011 - 20211019, 2 October 2021 (2021-10-02), XP052057847, Retrieved from the Internet <URL:https://ftp.3gpp.org/tsg_ran/WG1_RL1/TSGR1_106b-e/Docs/R1-2108750.zip R1-2108750.docx> [retrieved on 20211002]
- ERICSSON: "Introduction of Release-17 NTN", 3GPP DRAFT; R2-2204112, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Electronic Meeting; 20220201, 12 March 2022 (2022-03-12), Mobile Competence Centre ; 650, route des Lucioles ; F-06921 Sophia-Antipolis Cedex ; France, XP052131408

## Description

### [Technical Field]

The present disclosure relates to a wireless communication system, and more specifically to a method and device for performing uplink transmission and reception in a wireless communication system.

### [Background]

A mobile communication system has been developed to provide a voice service while guaranteeing mobility of users. However, a mobile communication system has extended even to a data service as well as a voice service, and currently, an explosive traffic increase has caused shortage of resources and users have demanded a faster service, so a more advanced mobile communication system has been required.

The requirements of a next-generation mobile communication system at large should be able to support accommodation of explosive data traffic, a remarkable increase in a transmission rate per user, accommodation of the significantly increased number of connected devices, very low End-to-End latency and high energy efficiency. To this end, a variety of technologies such as Dual Connectivity, Massive Multiple Input Multiple Output (Massive MIMO), In-band Full Duplex, Non-Orthogonal Multiple Access (NOMA), Super wideband Support, Device Networking, etc. have been researched.

US 2021/058971 A1 relates to apparatuses and methods for physical random access channel (PRACH) preamble transmissions or receptions. A method of a UE includes receiving a physical downlink shared channel (PDSCH) that provides a system information block (SIB). The SIB includes an indication for (i) a first transmission configuration indication (TCI) state that provides a first set of quasi-collocation (QCL) properties and (ii) for a second TCI state that provides a second set of QCL properties. The method further includes transmitting a first PRACH according to the first TCI state and a second PRACH according to the second TCI state.

ERICSSON: "On time and frequency synchronization enhancements for IoT NTN", 3GPP DRAFT; R1-2111420, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX; RAN WG1, e-Meeting; 5 November 2021, XP052074244, Retrieved from the Internet: URL:https://ftp.3gpp.org/tsg ran/WG1 RL1/TSGR1 107-e/Docs/R1-2111420.zip relates to time and frequency synchronization for both NB-IoT and eMTC NTN.

HUAWEI ET AL: "Discussion on time and frequency synchronization enhancement for IoT in NTN", 3GPP DRAFT; R1-2108750, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX, RAN WG1, e-Meeting; 2 October 2021, XP052057847, Retrieved from the Internet: URL:https://ftp.3gpp.org/tsg ran/WG1 RL1/TSGR1 106b-e/Docs/ R1-2108750.zip relates to time and frequency enhancements for NTN IoT.

### [Disclosure]

### [Technical Problem]

The technical problem of the present disclosure is to provide a method and device for performing uplink transmission and reception in a wireless communication system.

In addition, an additional technical problem of the present disclosure is to provide a method and device for configuring a time period during which TA (timing advance) must be maintained for repeated transmission of a PRACH preamble.

In addition, an additional technical problem of the present disclosure is to provide a method and device for independently configuring a time period during which TA must be maintained for each SSB beam direction.

The technical objects to be achieved by the present disclosure are not limited to the above-described technical objects, and other technical objects which are not described herein will be clearly understood by those skilled in the pertinent art from the following description.

### [Technical Solution]

The invention is defined by the independent claims. Exemplary embodiments are apparent from the dependent claims. In one embodiment of the present disclosure, a method according to claim 1 is provided.

In another embodiment of the present disclosure, a user equipment according to claim 9 is provided. Further, in another embodiment of the present disclosure, a base station according to claim 10 is provided.

### [Technical Effects]

According to an embodiment of the present disclosure, a method and device for performing uplink transmission and reception in a wireless communication system may be provided.

In addition, according to various embodiments of the present disclosure, a method and device for configuring a time period during which TA (timing advance) must be maintained for PRACH preamble repetitive transmission may be provided.

In addition, according to various embodiments of the present disclosure, a method and device for independently configuring a time period during which TA must be maintained for each SSB beam direction can be provided.

In addition, according to various embodiments of the present disclosure, since a time period during which UL TA must be maintained is configured during PRACH repetitive transmission, PRACH repetitive reception can be efficiently performed at a base station.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a structure of a wireless communication system to which the present disclosure may be applied.
FIG. 2 illustrates a frame structure in a wireless communication system to which the present disclosure may be applied.
FIG. 3 illustrates a resource grid in a wireless communication system to which the present disclosure may be applied.
FIG. 4 illustrates a physical resource block in a wireless communication system to which the present disclosure may be applied.
FIG. 5 illustrates a slot structure in a wireless communication system to which the present disclosure may be applied.
FIG. 6 illustrates physical channels used in a wireless communication system to which the present disclosure may be applied and a general signal transmission and reception method using them.
FIG. 7 illustrates an example of a wireless communication system supporting an unlicensed band applicable to the present disclosure.

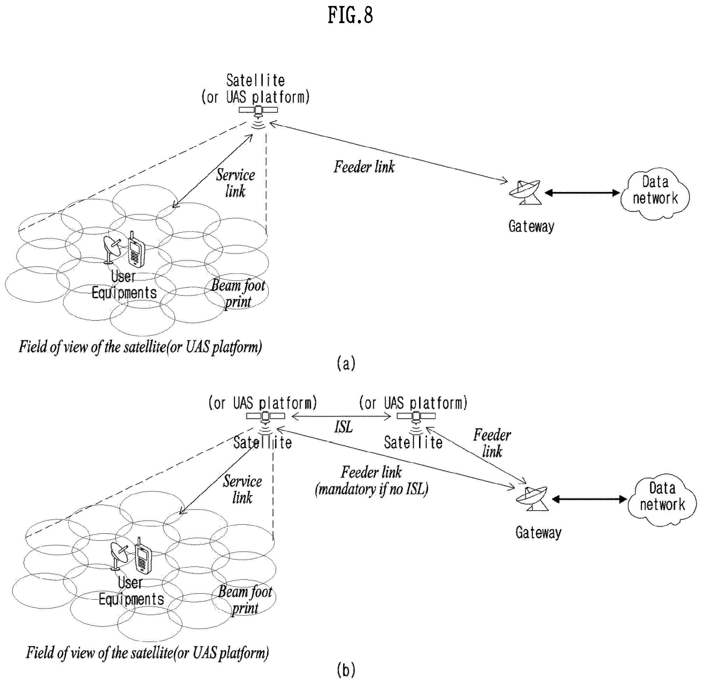

FIG. 8 is a diagram for describing an NTN supported by a wireless communication system applicable to the present disclosure.
FIG. 9 is a diagram for describing an uplink transmission operation of a terminal in a wireless communication system applicable to the present disclosure.
FIG. 10 is a diagram for explaining an uplink reception operation of a base station in a wireless communication system applicable to the present disclosure.
FIG. 11 is a diagram for describing an operation in which PRACH preamble repetition transmission is performed based on a UL segment according to an embodiment of the present disclosure.
FIG. 12 is a diagram for describing a signaling procedure of a network side and a terminal according to an embodiment of the present disclosure.
FIG. 13 is an exemplary block diagram of a wireless communication device according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within the present disclosure, a first element in an embodiment may be referred to as a second element in another embodiment and likewise, a second element in an embodiment may be referred to as a first element in another embodiment.

A term used in the present disclosure is to describe a specific embodiment. A singular form is intended to include a plural form, unless the context clearly indicates otherwise. A term used in the present disclosure, "and/or", may refer to one of related enumerated items or it means that it refers to and includes any and all possible combinations of two or more of them. In addition, **"/"** between words in the present disclosure has the same meaning as "and/or", unless otherwise described.

The present disclosure describes a wireless communication network or a wireless communication system, and an operation performed in a wireless communication network may be performed in a process in which a device (e.g., a base station) controlling a corresponding wireless communication network controls a network and transmits or receives a signal, or may be performed in a process in which a terminal associated to a corresponding wireless network transmits or receives a signal with a network or between terminals.

In the present disclosure, transmitting or receiving a channel includes a meaning of transmitting or receiving information or a signal through a corresponding channel. For example, transmitting a control channel means that control information or a control signal is transmitted through a control channel. Similarly, transmitting a data channel means that data information or a data signal is transmitted through a data channel.

Hereinafter, a downlink (DL) means a communication from a base station to a terminal and an uplink (UL) means a communication from a terminal to a base station. In a downlink, a transmitter may be part of a base station and a receiver may be part of a terminal. In an uplink, a transmitter may be part of a terminal and a receiver may be part of a base station. A base station may be expressed as a first communication device and a terminal may be expressed as a second communication device. A base station (BS) may be substituted with a term such as a fixed station, a Node B, an eNB(evolved-NodeB), a gNB(Next Generation NodeB), a BTS(base transceiver system), an Access Point (AP), a Network(5G network), an AI (Artificial Intelligence) system/module, an RSU(road side unit), a robot, a drone(UAV: Unmanned Aerial Vehicle), an AR(Augmented Reality) device, a VR(Virtual Reality) device, etc. In addition, a terminal may be fixed or mobile, and may be substituted with a term such as a UE(User Equipment), an MS(Mobile Station), a UT(user terminal), an MSS(Mobile Subscriber Station), an SS(Subscriber Station), an AMS(Advanced Mobile Station), a WT(Wireless terminal), an MTC(Machine-Type Communication) device, an M2M(Machine-to-Machine) device, a D2D(Device-to-Device) device, a vehicle, an RSU(road side unit), a robot, an AI(Artificial Intelligence) module, a drone(UAV: Unmanned Aerial Vehicle), an AR(Augmented Reality) device, a VR(Virtual Reality) device, etc.

The following description may be used for a variety of radio access systems such as CDMA, FDMA, TDMA, OFDMA, SC-FDMA, etc. CDMA may be implemented by a wireless technology such as UTRA(Universal Terrestrial Radio Access) or CDMA2000. TDMA may be implemented by a radio technology such as GSM(Global System for Mobile communications)/GPRS(General Packet Radio Service)/EDGE(Enhanced Data Rates for GSM Evolution). OFDMA may be implemented by a radio technology such as IEEE 802.11(Wi-Fi), IEEE 802.16(WiMAX), IEEE 802-20, E-UTRA(Evolved UTRA), etc. UTRA is a part of a UMTS (Universal Mobile Telecommunications System). 3GPP(3rd Generation Partnership Project) LTE(Long Term Evolution) is a part of an E-UMTS (Evolved UMTS) using E-UTRA and LTE-A(Advanced)/LTE-A pro is an advanced version of 3GPP LTE. 3GPP NR(New Radio or New Radio Access Technology) is an advanced version of 3GPP LTE/LTE-A/LTE-A pro.

To clarify description, it is described based on a 3GPP communication system (e.g., LTE-A, NR), but a technical idea of the present disclosure is not limited thereto. LTE means a technology after 3GPP TS(Technical Specification) 36.xxx Release 8. In detail, an LTE technology in or after 3GPP TS 36.xxx Release 10 is referred to as LTE-A and an LTE technology in or after 3GPP TS 36.xxx Release 13 is referred to as LTE-A pro. 3GPP NR means a technology in or after TS 38.xxx Release 15. LTE/NR may be referred to as a 3GPP system. "xxx" means a detailed number for a standard document. LTE/NR may be commonly referred to as a 3GPP system. For a background art, a term, an abbreviation, etc. used to describe the present disclosure, matters described in a standard document disclosed before the present disclosure may be referred to. For example, the following document may be referred to.

For 3GPP LTE, TS 36.211(physical channels and modulation), TS 36.212(multiplexing and channel coding), TS 36.213(physical layer procedures), TS 36.300(overall description), TS 36.331(radio resource control) may be referred to.

For 3GPP NR, TS 38.211(physical channels and modulation), TS 38.212 (multiplexing and channel coding), TS 38.213(physical layer procedures for control), TS 38.214(physical layer procedures for data), TS 38.300(NR and NG-RAN(New Generation-Radio Access Network) overall description), TS 38.331(radio resource control protocol specification) may be referred to.

Abbreviations of terms which may be used in the present disclosure is defined as follows.
- BM: beam management
- CQI: Channel Quality Indicator
- CRI: channel state information - reference signal resource indicator
- CSI: channel state information
- CSI-IM: channel state information - interference measurement
- CSI-RS: channel state information - reference signal
- DMRS: demodulation reference signal
- FDM: frequency division multiplexing
- FFT: fast Fourier transform
- IFDMA: interleaved frequency division multiple access
- IFFT: inverse fast Fourier transform
- L1-RSRP: Layer 1 reference signal received power
- L1-RSRQ: Layer 1 reference signal received quality
- MAC: medium access control
- NZP: non-zero power
- OFDM: orthogonal frequency division multiplexing
- PDCCH: physical downlink control channel
- PDSCH: physical downlink shared channel
- PMI: precoding matrix indicator
- RE: resource element
- RI: Rank indicator
- RRC: radio resource control
- RSSI: received signal strength indicator
- Rx: Reception
- QCL: quasi co-location
- SINR: signal to interference and noise ratio
- SSB (or SS/PBCH block): Synchronization signal block (including PSS (primary synchronization signal), SSS (secondary synchronization signal) and PBCH (physical broadcast channel))
- TDM: time division multiplexing
- TRP: transmission and reception point
- TRS: tracking reference signal
- Tx: transmission
- UE: user equipment
- ZP: zero power

### Overall System

As more communication devices have required a higher capacity, a need for an improved mobile broadband communication compared to the existing radio access technology (RAT) has emerged. In addition, massive MTC (Machine Type Communications) providing a variety of services anytime and anywhere by connecting a plurality of devices and things is also one of main issues which will be considered in a next-generation communication. Furthermore, a communication system design considering a service/a terminal sensitive to reliability and latency is also discussed. As such, introduction of a next-generation RAT considering eMBB(enhanced mobile broadband communication), mMTC (massive MTC), URLLC (Ultra-Reliable and Low Latency Communication), etc. is discussed and, for convenience, a corresponding technology is referred to as NR in the present disclosure. NR is an expression which represents an example of a 5G RAT.

A new RAT system including NR uses an OFDM transmission method or a transmission method similar to it. A new RAT system may follow OFDM parameters different from OFDM parameters of LTE. Alternatively, a new RAT system follows a numerology of the existing LTE/LTE-A as it is, but may support a wider system bandwidth (e.g., 100MHz). Alternatively, one cell may support a plurality of numerologies. In other words, terminals which operate in accordance with different numerologies may coexist in one cell.

A numerology corresponds to one subcarrier spacing in a frequency domain. As a reference subcarrier spacing is scaled by an integer N, a different numerology may be defined.

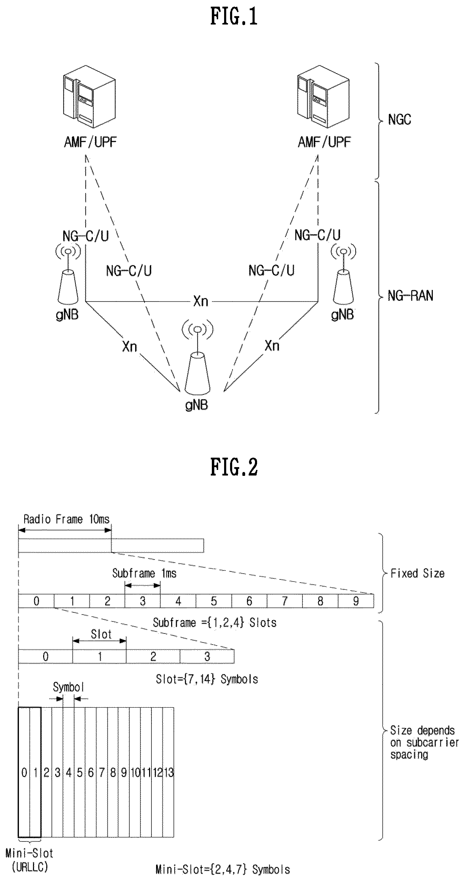

FIG. 1 illustrates a structure of a wireless communication system to which the present disclosure may be applied.

In reference to FIG. 1, NG-RAN is configured with gNBs which provide a control plane (RRC) protocol end for a NG-RA(NG-Radio Access) user plane (i.e., a new AS(access stratum) sublayer/PDCP(Packet Data Convergence Protocol)/RLC(Radio Link Control)/MAC/PHY) and UE. The gNBs are interconnected through a Xn interface. The gNB, in addition, is connected to an NGC(New Generation Core) through an NG interface. In more detail, the gNB is connected to an AMF(Access and Mobility Management Function) through an N2 interface, and is connected to a UPF(User Plane Function) through an N3 interface.

FIG. 2 illustrates a frame structure in a wireless communication system to which the present disclosure may be applied.

A NR system may support a plurality of numerologies. Here, a numerology may be defined by a subcarrier spacing and a cyclic prefix (CP) overhead. Here, a plurality of subcarrier spacings may be derived by scaling a basic (reference) subcarrier spacing by an integer N (or, µ). In addition, although it is assumed that a very low subcarrier spacing is not used in a very high carrier frequency, a used numerology may be selected independently from a frequency band. In addition, a variety of frame structures according to a plurality of numerologies may be supported in a NR system.

Hereinafter, an OFDM numerology and frame structure which may be considered in a NR system will be described. A plurality of OFDM numerologies supported in a NR system may be defined as in the following Table 1.

**[Table 1]**

| µ | Δf=2^{µ}·15 [kHz] | CP |
|---|---|---|
| 0 | 15 | Normal |
| 1 | 30 | Normal |
| 2 | 60 | Normal, Extended |
| 3 | 120 | Normal |
| 4 | 240 | Normal |

NR supports a plurality of numerologies (or subcarrier spacings (SCS)) for supporting a variety of 5G services. For example, when a SCS is 15kHz, a wide area in traditional cellular bands is supported, and when a SCS is 30kHz/60kHz, dense-urban, lower latency and a wider carrier bandwidth are supported, and when a SCS is 60kHz or higher, a bandwidth wider than 24.25GHz is supported to overcome a phase noise. An NR frequency band is defined as a frequency range in two types (FR1, FR2). FR1, FR2 may be configured as in the following Table 2. In addition, FR2 may mean a millimeter wave (mmW).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Regarding a frame structure in an NR system, a size of a variety of fields in a time domain is expresses as a multiple of a time unit of T_{c}=1/ (Δfₘₐₓ ·N_{f}). Here, Δfₘₐₓ is 480·10³ Hz and N_{f} is 4096. Downlink and uplink transmission is configured (organized) with a radio frame having a duration of T_{f}=1/(ΔfₘₐₓN_{f}/100) ·T_{c}=10ms. Here, a radio frame is configured with 10 subframes having a duration of T_{sf}=(ΔfₘₐₓN_{f}/1000) ·T_{c}=1ms, respectively. In this case, there may be one set of frames for an uplink and one set of frames for a downlink. In addition, transmission in an uplink frame No. i from a terminal should start earlier by T_{TA}=(N_{TA}+N_{TA,offset})T_{c} than a corresponding downlink frame in a corresponding terminal starts. For a subcarrier spacing configuration µ, slots are numbered in an increasing order of nₛ^{µ}∈{0,..., Nₛₗₒₜ^{subframe,µ}-1} in a subframe and are numbered in an increasing order of n_{s,f}^{µ}∈{0,..., Nₛₗₒₜ^{frame,µ}-1} in a radio frame. One slot is configured with N_{symb}^{slot} consecutive OFDM symbols and N_{symb}^{slot} is determined according to CP. A start of a slot nₛ^{µ} in a subframe is temporally arranged with a start of an OFDM symbol nₛ^{µ}N_{symb}^{slot} in the same subframe. All terminals may not perform transmission and reception at the same time, which means that all OFDM symbols of a downlink slot or an uplink slot may not be used.

Table 3 represents the number of OFDM symbols per slot (N_{symp}^{slot}), the number of slots per radio frame (Nₛₗₒₜ^{frame,µ}) and the number of slots per subframe (Nₛₗₒₜ^{subframe,µ}) in a normal CP and Table 4 represents the number of OFDM symbols per slot, the number of slots per radio frame and the number of slots per subframe in an extended CP.

**[Table 3]**

| µ | N_{symb}^{slot} | Nₛₗₒₜ^{frame,µ} | Nₛₗₒₜ^{subframe,µ} |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

**[Table 4]**

| µ | N_{symb}^{slot} | Nₛₗₒₜ^{frame,µ} | Nₛₗₒₜ^{subframe,µ} |
|---|---|---|---|
| 2 | 12 | 40 | 4 |

FIG. 2 is an example on µ=2 (SCS is 60kHz), 1 subframe may include 4 slots referring to Table 3. 1 subframe={1,2,4} slot shown in FIG. 2 is an example, the number of slots which may be included in 1 subframe is defined as in Table 3 or Table 4. In addition, a mini-slot may include 2, 4 or 7 symbols or more or less symbols. Regarding a physical resource in a NR system, an antenna port, a resource grid, a resource element, a resource block, a carrier part, etc. may be considered.

Hereinafter, the physical resources which may be considered in an NR system will be described in detail. First, in relation to an antenna port, an antenna port is defined so that a channel where a symbol in an antenna port is carried can be inferred from a channel where other symbol in the same antenna port is carried. When a large-scale property of a channel where a symbol in one antenna port is carried may be inferred from a channel where a symbol in other antenna port is carried, it may be said that 2 antenna ports are in a QC/QCL(quasi co-located or quasi co-location) relationship. In this case, the large-scale property includes at least one of delay spread, doppler spread, frequency shift, average received power, received timing.

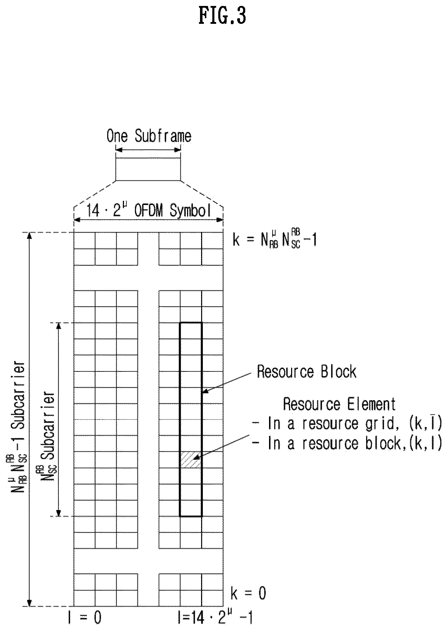

FIG. 3 illustrates a resource grid in a wireless communication system to which the present disclosure may be applied. In reference to FIG. 3**,** it is illustratively described that a resource grid is configured with N_{RB}µN_{sc}^{RB} subcarriers in a frequency domain and one subframe is configured with 14·2^{µ} OFDM symbols, but it is not limited thereto. In an NR system, a transmitted signal is described by OFDM symbols of 2^{µ}N_{symb}^{(µ)} and one or more resource grids configured with N_{RB}^{µ}N_{sc}^{RB} subcarriers. Here, N_{RB}^{µ}≤N_{RB}^{max,µ}. The N_{RB}^{max,µ} represents a maximum transmission bandwidth, which may be different between an uplink and a downlink as well as between numerologies. In this case, one resource grid may be configured per µ and antenna port p**.** Each element of a resource grid for µ and an antenna port p is referred to as a resource element and is uniquely identified by an index pair (k,l'). Here, k=0,...,N_{RB}^{µ}N_{sc}^{RB}-1 is an index in a frequency domain and l'=0, ..., 2^{µ}N_{symb}^{(µ)}-1 refers to a position of a symbol in a subframe. When referring to a resource element in a slot, an index pair (k,l) is used. Here, l=0,...,N_{symb}^{µ}-1. A resource element (k,l') for µ and an antenna port p corresponds to a complex value, a_{k,l'}^{(p,µ)}. When there is no risk of confusion or when a specific antenna port or numerology is not specified, indexes p and µ may be dropped, whereupon a complex value may be a_{k,l'}^{(p)} or a_{k,l'}. In addition, a resource block (RB) is defined as N_{sc}^{RB}=12 consecutive subcarriers in a frequency domain. Point A plays a role as a common reference point of a resource block grid and is obtained as follows.
- offsetToPointA for a primary cell (PCell) downlink represents a frequency offset between point A and the lowest subcarrier of the lowest resource block overlapped with a SS/PBCH block which is used by a terminal for an initial cell selection. It is expressed in resource block units assuming a 15kHz subcarrier spacing for FR1 and a 60kHz subcarrier spacing for FR2.
- absoluteFrequencyPointA represents a frequency-position of point A expressed as in ARFCN (absolute radiofrequency channel number).

Common resource blocks are numbered from 0 to the top in a frequency domain for a subcarrier spacing configuration µ. The center of subcarrier 0 of common resource block 0 for a subcarrier spacing configuration µ is identical to 'point A'. A relationship between a common resource block number n_{CRB}^{µ} and a resource element (k,l) for a subcarrier spacing configuration µ in a frequency domain is given as in the following Equation 1. ${n}_{CRB}^{μ} = \left⌊\frac{k}{{N}_{sc}^{RB}}\right⌋$

In Equation 1, k is defined relatively to point A so that k=0 corresponds to a subcarrier centering in point A. Physical resource blocks are numbered from 0 to N_{BWP,i}^{size,µ}-1 in a bandwidth part (BWP) and i is a number of a BWP. A relationship between a physical resource block n_{PRB} and a common resource block n_{CRB} in BWP i is given by the following Equation 2. ${n}_{CRB}^{μ} = {n}_{PRB}^{μ} + {N}_{BWP , i}^{start , μ}$

N_{BWP,i}^{start,µ} is a common resource block that a BWP starts relatively to common resource block 0.

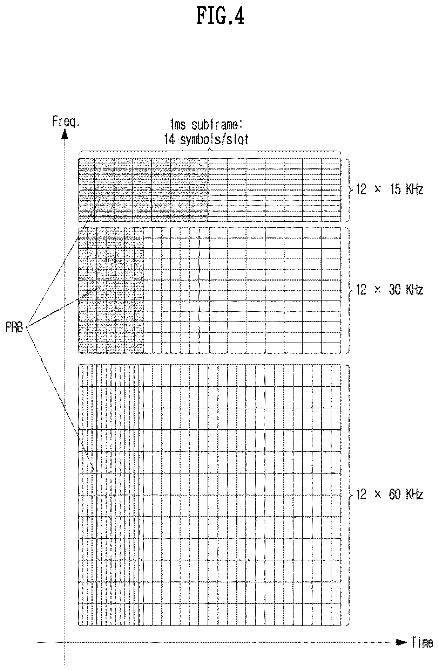

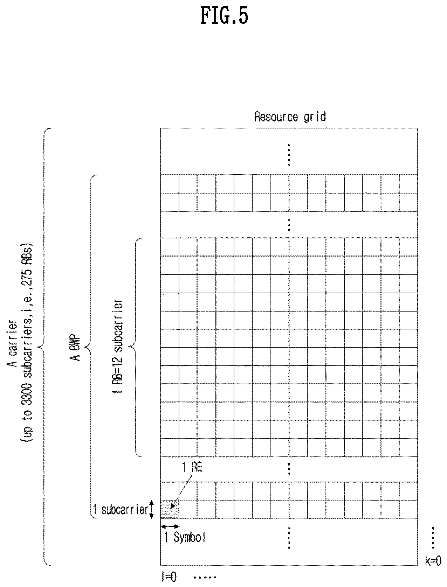

FIG. 4 illustrates a physical resource block in a wireless communication system to which the present disclosure may be applied. And, FIG. 5 illustrates a slot structure in a wireless communication system to which the present disclosure may be applied.

In reference to FIG. 4 and FIG. 5, a slot includes a plurality of symbols in a time domain. For example, for a normal CP, one slot includes 7 symbols, but for an extended CP, one slot includes 6 symbols.

A carrier includes a plurality of subcarriers in a frequency domain. An RB (Resource Block) is defined as a plurality of (e.g., 12) consecutive subcarriers in a frequency domain. A BWP(Bandwidth Part) is defined as a plurality of consecutive (physical) resource blocks in a frequency domain and may correspond to one numerology (e.g., an SCS, a CP length, etc.). A carrier may include a maximum N (e.g., 5) BWPs. A data communication may be performed through an activated BWP and only one BWP may be activated for one terminal. In a resource grid, each element is referred to as a resource element (RE) and one complex symbol may be mapped.

In an NR system, up to 400 MHz may be supported per component carrier (CC). If a terminal operating in such a wideband CC always operates turning on a radio frequency (FR) chip for the whole CC, terminal battery consumption may increase. Alternatively, when several application cases operating in one wideband CC (e.g., eMBB, URLLC, Mmtc, V2X, etc.) are considered, a different numerology (e.g., a subcarrier spacing, etc.) may be supported per frequency band in a corresponding CC. Alternatively, each terminal may have a different capability for the maximum bandwidth. By considering it, a base station may indicate a terminal to operate only in a partial bandwidth, not in a full bandwidth of a wideband CC, and a corresponding partial bandwidth is defined as a bandwidth part (BWP) for convenience. A BWP may be configured with consecutive RBs on a frequency axis and may correspond to one numerology (e.g., a subcarrier spacing, a CP length, a slot/a mini-slot duration).

Meanwhile, a base station may configure a plurality of BWPs even in one CC configured to a terminal. For example, a BWP occupying a relatively small frequency domain may be configured in a PDCCH monitoring slot, and a PDSCH indicated by a PDCCH may be scheduled in a greater BWP. Alternatively, when UEs are congested in a specific BWP, some terminals may be configured with other BWP for load balancing. Alternatively, considering frequency domain inter-cell interference cancellation between neighboring cells, etc., some middle spectrums of a full bandwidth may be excluded and BWPs on both edges may be configured in the same slot. In other words, a base station may configure at least one DL/UL BWP to a terminal associated with a wideband CC. A base station may activate at least one DL/UL BWP of configured DL/UL BWP(s) at a specific time (by L1 signaling or MAC CE(Control Element) or RRC signaling, etc.). In addition, a base station may indicate switching to other configured DL/UL BWP (by L1 signaling or MAC CE or RRC signaling, etc.). Alternatively, based on a timer, when a timer value is expired, it may be switched to a determined DL/UL BWP. Here, an activated DL/UL BWP is defined as an active DL/UL BWP. But, a configuration on a DL/UL BWP may not be received when a terminal performs an initial access procedure or before a RRC connection is set up, so a DL/UL BWP which is assumed by a terminal under these situations is defined as an initial active DL/UL BWP.

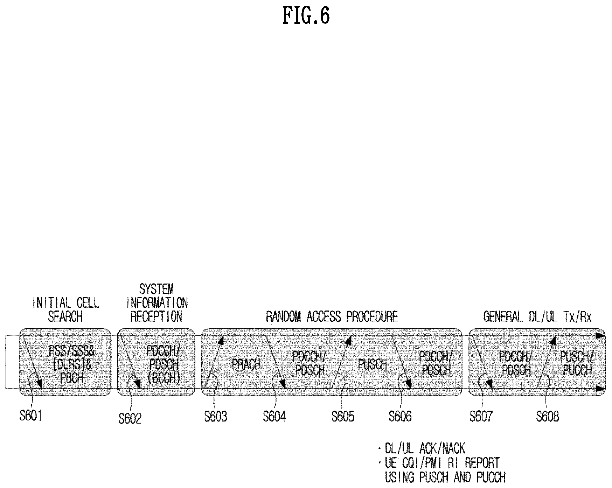

FIG. 6 illustrates physical channels used in a wireless communication system to which the present disclosure may be applied and a general signal transmission and reception method using them.

In a wireless communication system, a terminal receives information through a downlink from a base station and transmits information through an uplink to a base station. Information transmitted and received by a base station and a terminal includes data and a variety of control information and a variety of physical channels exist according to a type/a usage of information transmitted and received by them.

When a terminal is turned on or newly enters a cell, it performs an initial cell search including synchronization with a base station or the like (S601). For the initial cell search, a terminal may synchronize with a base station by receiving a primary synchronization signal (PSS) and a secondary synchronization signal (SSS) from a base station and obtain information such as a cell identifier (ID), etc. After that, a terminal may obtain broadcasting information in a cell by receiving a physical broadcast channel (PBCH) from a base station. Meanwhile, a terminal may check out a downlink channel state by receiving a downlink reference signal (DL RS) at an initial cell search stage.

A terminal which completed an initial cell search may obtain more detailed system information by receiving a physical downlink control channel (PDCCH) and a physical downlink shared channel (PDSCH) according to information carried in the PDCCH (S602).

Meanwhile, when a terminal accesses to a base station for the first time or does not have a radio resource for signal transmission, it may perform a random access (RACH) procedure to a base station (S603 to S606). For the random access procedure, a terminal may transmit a specific sequence as a preamble through a physical random access channel (PRACH) (S603 and S605) and may receive a response message for a preamble through a PDCCH and a corresponding PDSCH (S604 and S606). A contention based RACH may additionally perform a contention resolution procedure.

A terminal which performed the above-described procedure subsequently may perform PDCCH/PDSCH reception (S607) and PUSCH (Physical Uplink Shared Channel) /PUCCH (physical uplink control channel) transmission (S608) as a general uplink/downlink signal transmission procedure. In particular, a terminal receives downlink control information (DCI) through a PDCCH. Here, DCI includes control information such as resource allocation information for a terminal and a format varies depending on its purpose of use.

Meanwhile, control information which is transmitted by a terminal to a base station through an uplink or is received by a terminal from a base station includes a downlink/uplink ACK/NACK(Acknowledgement/Non-Acknowledgement) signal, a CQI(Channel Quality Indicator), a PMI(Precoding Matrix Indicator), a RI(Rank Indicator), etc. For a 3GPP LTE system, a terminal may transmit control information of the above-described CQI/PMI/RI, etc. through a PUSCH and/or a PUCCH.

Table 5 represents an example of a DCI format in an NR system.

**[Table 5]**

| DCI Format | Use |
|---|---|
| 0_0 | Scheduling of a PUSCH in one cell |
| 0_1 | Scheduling of one or multiple PUSCHs in one cell, or indication of cell group downlink feedback information to a UE |
| 0_2 | Scheduling of a PUSCH in one cell |
| 1_0 | Scheduling of a PDSCH in one DL cell |
| 1_1 | Scheduling of a PDSCH in one cell |
| 1_2 | Scheduling of a PDSCH in one cell |

In reference to Table 5, DCI formats 0_0, 0_1 and 0_2 may include resource information (e.g., UL/SUL(Supplementary UL), frequency resource allocation, time resource allocation, frequency hopping, etc.), information related to a transport block(TB) (e.g., MCS(Modulation Coding and Scheme), a NDI(New Data Indicator), a RV(Redundancy Version), etc.), information related to a HARQ(Hybrid - Automatic Repeat and request) (e.g., a process number, a DAI(Downlink Assignment Index), PDSCH-HARQ feedback timing, etc.), information related to multiple antennas (e.g., DMRS sequence initialization information, an antenna port, a CSI request, etc.), power control information (e.g., PUSCH power control, etc.) related to scheduling of a PUSCH and control information included in each DCI format may be pre-defined.

DCI format 0_0 is used for scheduling of a PUSCH in one cell. Information included in DCI format 0_0 is CRC (cyclic redundancy check) scrambled by a C-RNTI(Cell Radio Network Temporary Identifier) or a CS-RNTI(Configured Scheduling RNTI) or a MCS-C-RNTI(Modulation Coding Scheme Cell RNTI) and transmitted.

DCI format 0_1 is used to indicate scheduling of one or more PUSCHs or configure grant (CG) downlink feedback information to a terminal in one cell. Information included in DCI format 0_1 is CRC scrambled by a C-RNTI or a CS-RNTI or a SP-CSI-RNTI(Semi-Persistent CSI RNTI) or a MCS-C-RNTI and transmitted.

DCI format 0_2 is used for scheduling of a PUSCH in one cell. Information included in DCI format 0_2 is CRC scrambled by a C-RNTI or a CS-RNTI or a SP-CSI-RNTI or a MCS-C-RNTI and transmitted.

Next, DCI formats 1_0, 1_1 and 1_2 may include resource information (e.g., frequency resource allocation, time resource allocation, VRB(virtual resource block)-PRB(physical resource block) mapping, etc.), information related to a transport block(TB) (e.g., MCS, NDI, RV, etc.), information related to a HARQ (e.g., a process number, DAI, PDSCH-HARQ feedback timing, etc.), information related to multiple antennas (e.g., an antenna port, a TCI(transmission configuration indicator), a SRS(sounding reference signal) request, etc.), information related to a PUCCH (e.g., PUCCH power control, a PUCCH resource indicator, etc.) related to scheduling of a PDSCH and control information included in each DCI format may be pre-defined. DCI format 1_0 is used for scheduling of a PDSCH in one DL cell. Information included in DCI format 1_0 is CRC scrambled by a C-RNTI or a CS-RNTI or a MCS-C-RNTI and transmitted.

DCI format 1_1 is used for scheduling of a PDSCH in one cell. Information included in DCI format 1_1 is CRC scrambled by a C-RNTI or a CS-RNTI or a MCS-C-RNTI and transmitted.

DCI format 1_2 is used for scheduling of a PDSCH in one cell. Information included in DCI format 1_2 is CRC scrambled by a C-RNTI or a CS-RNTI or a MCS-C-RNTI and transmitted.

### Wireless communication system supporting unlicensed band/shared spectrum

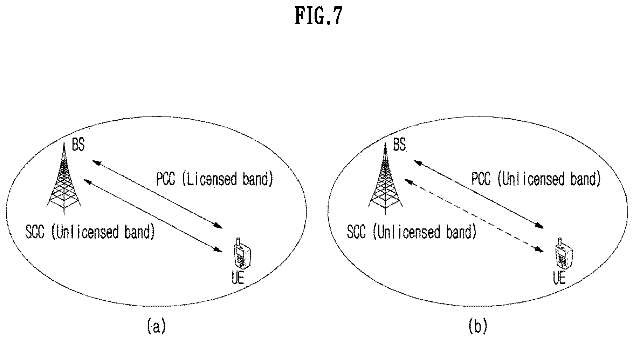

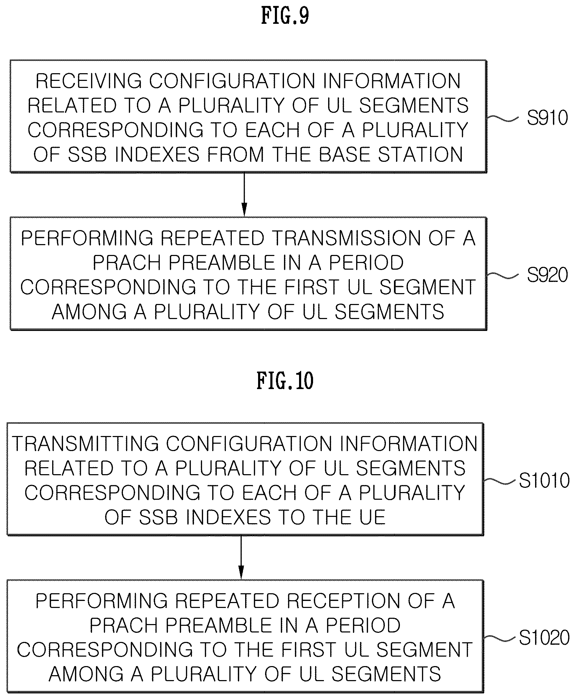

FIG. 7 shows an example of a wireless communication system supporting an unlicensed band applicable to the present disclosure. For example, FIG. 9 illustrates an unlicensed spectrum (NR-U) wireless communication system.

In the following description, a cell operating in a licensed-band (L-band) is defined as an LCell, and a carrier of the LCell is defined as a (downlink/uplink) LCC. In addition, a cell operating in an unlicensed band (U-band) is defined as a UCell, and a carrier of the UCell is defined as a (downlink/uplink) UCC. The carrier/carrier-frequency of a cell may mean an operating frequency (e.g., center frequency) of the cell. A cell/carrier (e.g., a component carrier (CC)) is collectively referred to as a cell.

As shown in (a) of FIG. 7, when a terminal and a base station transmit and receive signals through carrier aggregation (CA) LCC and UCC, the LCC may be configured as a primary CC (PCC) and the UCC may be configured as a secondary CC (SCC). And, as shown in (b) of FIG. 7, the terminal and the base station may transmit and receive signals through one UCC or a plurality of UCCs combined with carriers. That is, the terminal and the base station may transmit and receive signals only through UCC(s) without LCC. For standalone operation, PRACH, PUCCH, PUSCH, SRS transmission, etc. may be supported in UCell.

For example, the unlicensed band may be included in a specific frequency range (e.g., from 52.6 GHz to 71 GHz) higher than the existing frequency range (e.g., FR1 and FR2). The specific frequency range may be referred to as FR2-2 (in this case, the existing FR2 (i.e., 24250 MHz - 52600 MHz) may be referred to as FR2-1) or may be referred to as FR3. The disclosure is not limited to the designations FR2-2 or FR3.

### A wireless communication system supporting a non-terrestrial network (NTN)

NTN refers to a network or a segment of a network configured to use a radio resource (RF resource) in a satellite or unmanned aircraft system (UAS) platform. In order to secure wider coverage or to provide a wireless communication service in a place where it is not easy to install a wireless communication base station, the use of the NTN service is being considered.

Here, the NTN service refers to providing a wireless communication service to UEs by installing a base station on an artificial satellite(e.g., geostationary-orbit, low-orbit, medium-orbit satellite, etc.), an airplane, an unmanned aerial vehicle, a drone, etc. rather than on the ground. In the following description, the NTN service may include an NR NTN service and/or an LTE NTN service. A terrestrial network (TN) service refers to providing a wireless communication service to UEs by installing a base station on the ground.

A frequency band considered for the NTN service may be a 2 GHz band (S-band: 2-4 GHz) in the frequency range 1 (FR1) (e.g., 410 MHz to 7.125 GHz), and a downlink 20 GHz and uplink 30 GHz band (Ka-Band: 26.5~40GHz) in the frequency range 2(FR2). Additionally, the NTN service may be supported in a frequency band between 7.125 GHz and 24.25 GHz or in a frequency band of 52.6 GHz or higher.

FIG. 7 is a diagram for describing NTN supported by a wireless communication system to which the present disclosure may be applied.

FIG. 7 (a) illustrates an NTN scenario based on a transparent payload (transparent payload) and FIG. 7 (b) illustrates an NTN scenario based on a regenerative payload (regenerative payload).

Here, the NTN scenario based on the transparent payload is a scenario in which an artificial satellite that has received a payload from a terrestrial base station transmits the corresponding payload to the UE, and the NTN scenario based on the regenerative payload refers to a scenario in which an artificial satellite is implemented as a base station (gNB).

NTNs are typically characterized by the following elements:
- one or more satellite-gateways for connecting NTN to public data networks:
   A geostationary earth orbiting (GEO) satellite is fed by one or more satellite-gateways that are deployed in coverage targeted by the satellite (e.g., regional or continental coverage). A UE in a cell may be assumed to be served by only one satellite-gateway.

Non-GEO satellites may be successively served by one or more satellite-gateways. At this time, the wireless communication system guarantees service and feeder link continuity between the serving satellite-gateways for a time period sufficient to proceed with mobility anchoring and handover.
- A feeder link or radio link between the satellite-gateway and the satellite (or UAS platform)
- Service link or radio link between the UE and the satellite (or UAS platform)
- A satellite (or UAS platform) capable of implementing either a transparent or a regenerated (including on-board processing) payload.

Satellite (or UAS platform) generated beams generally generate a plurality of beams in a service area bounded by the field of view of the satellite (or UAS platform). The footprint of the beam is generally elliptical. The view of the satellite (or UAS platform) is determined by the onboard antenna diagram and the minimum elevation angle.

Transparent Payload: radio frequency filtering, frequency conversion and amplification. Accordingly, the waveform signal repeated by the payload is un-changed.

Regenerative payload: radio frequency filtering, frequency transformation and amplification as well as demodulation/decoding, switching and/or routing, coding/modulation. This is effectively equivalent to having all or part of the base station functions (e.g. gNB) on a satellite (or UAS platform).
- Inter-satellite links (ISL) for satellite groups. This requires a regenerative payload on the satellite. ISLs may operate at RF frequencies or optical bands.
- The UE is serviced by a satellite (or UAS platform) within the target service area.

Table 6 illustrates the types of satellites (or UAS platforms).

**[Table 6]**

| Platform | Altitude range | Orbit | Typical beam footprint size |
|---|---|---|---|
| Low-Earth Orbit (LEO) satellite | 300 - 1500 km | Circular around the earth | 100 - 1000 km |
| Medium-Earth Orbit (MEO) satellite | 7000 - 25000 km | | 100 - 1000 km |
| Geostationary Earth Orbit (GEO) satellite | 35 786 km | notional station keeping position fixed in terms of elevation/azimuth with respect to a given earth point | 200 - 3500 km |
| UAS platform (including HAPS) | 8 - 50 km (20 km for HAPS) | | 5 - 200 km |
| High Elliptical Orbit (HEO) satellite | 400 - 50000 km | Elliptical around the earth | 200 - 3500 km |

Typically, GEO satellites and UAS are used to provide continental, regional or local services. And, a constellation of low earth orbiting (LEO) and medium earth orbiting (MEO) is used to provide services in both the northern and southern hemispheres. Alternatively, the corresponding constellation may provide global coverage including the polar region. In the future, appropriate orbital inclination, sufficient beams generated and inter-satellite links may be required. In addition, a highly elliptical orbiting (HEO) satellite system may be considered. Hereinafter, a wireless communication system in NTN including the following six reference scenarios will be described.
- Circular orbiting and notional station keeping platforms.
- Highest RTD (Round Trip Delay) constraint
- Highest Doppler constraint
- A transparent and a regenerative payload
- One ISL case and one without ISL case. Regenerative payload for inter-satellite links

The six reference scenarios are considered in Tables 7 and 8.

**[Table 7]**

| | Transparent satellite | Regenerative satellite |
|---|---|---|
| GEO based non-terrestrial access network | Scenario A | Scenario B |
| LEO based non-terrestrial access network: | Scenario C1 | Scenario D1 |
| steerable beams | | |
| LEO based non-terrestrial access network: | Scenario C2 | Scenario D2 |
| the beams move with the satellite | | |

**[Table 8]**

| | | |
|---|---|---|
| Scenarios | GEO based non-terrestrial access network (Scenario A and B) | LEO based non-terrestrial access network (Scenario C & D) |
| Orbit type | notional station keeping position fixed in terms of elevation/azimuth with respect to a given earth point | circular orbiting around the earth |
| Altitude | 35,786 km | 600 km 1,200 km |
| Spectrum (service link) | In FR1 (e.g., 2 GHz) | |
| | IN FR2 (e.g., DL 20 GHz, UL 30 GHz) | |

| Max channel bandwidth capability (service link) | 30 MHz in FR1 | |
|---|---|---|
| | 1 GHz in FR2 | |
| Payload | Scenario A : Transparent (including radio frequency function only) | Scenario C: Transparent (including radio frequency function only) |
| | Scenario B: regenerative (including all or part of RAN functions) | Scenario D: Regenerative (including all or part of RAN functions) |
| Inter-Satellite link | No | Scenario C: No |
| | | Scenario D: Yes/No (Both cases are possible.) |
| Earth-fixed beams | Yes | Scenario C1: Yes (steerable beams), see note 1 |
| | | Scenario C2: No (the beams move with the satellite) |
| | | Scenario D 1: Yes (steerable beams), see note 1 |
| | | Scenario D 2: No (the beams move with the satellite) |
| Max beam foot print size (edge to edge) regardless of the elevation angle | 3500 km (Note 5) | 1000 km |
| Min Elevation angle for both sat-gateway and user equipment | 10° for service link and 10° for feeder link | 10° for service link and 10° for feeder link |
| Max distance between satellite and user equipment at min elevation angle | 40,581 km | 1,932 km (600 km altitude) |
| | | 3,131 km (1,200 km altitude) |
| Max Round Trip Delay (propagation delay only) | Scenario A: 541.46 ms (service and feeder links) | Scenario C: (transparent payload: service and feeder links) |
| | | 25.77 ms (600km) |
| | | 41.77 ms (1200km) |
| | Scenario B: 270.73 ms (service link only) | Scenario D: (regenerative payload: service link only) |
| | | 12.89 ms (600km) |
| | | 20.89 ms (1200km) |
| Max differential delay within a cell (Note 6) | 10.3 ms | 3.12 ms and 3.18 ms for respectively 600km and 1200km |
| Max Doppler shift (earth fixed user equipment) | 0.93 ppm | 24 ppm (600km) |
| | | 21ppm(1200km) |
| Max Doppler shift variation (earth fixed user equipment) | 0.000 045 ppm/s | 0.27ppm/s (600km) |
| | | 0.13ppm/s (1200km) |
| User equipment motion on the earth | 1200 km/h (e.g. aircraft) | 500 km/h (e.g. high speed train) |
| | | Possibly 1200 km/h (e.g. aircraft) |
| User equipment antenna types | Omnidirectional antenna (linear polarisation), assuming 0 dBi | |
| | Directive antenna (up to 60 cm equivalent aperture diameter in circular polarisation) | |
| User equipment Tx power | Omnidirectional antenna: UE power class 3 with up to 200 mW | |
| | Directive antenna: up to 20 W | |
| User equipment Noise figure | Omnidirectional antenna: 7 dB | |
| | Directive antenna: 1.2 dB | |
| Service link | 3GPP defined New Radio | |
| Feeder link | 3GPP or non-3GPP defined Radio interface | 3GPP or non-3GPP defined Radio interface |

| | | |
|---|---|---|
| NOTE 1: Each satellite may have the capability to steer beams towards fixed points on earth using beamforming techniques. This is applicable for a period of time corresponding to the visibility time of the satellite. NOTE 2: Max delay variation within a beam (earth fixed user equipment) is calculated based on Min Elevation angle for both gateway and user equipment. NOTE 3: Max differential delay within a beam is calculated based on Max beam foot print diameter at nadir NOTE 4: Speed of light used for delay calculation is 299792458 m/s. NOTE 5: The Maximum beam foot print size for GEO is based on current state of the art GEO High Throughput systems, assuming either spot beams at the edge of coverage (low elevation). NOTE 6: The maximum differential delay at the cell level is calculated by considering the delay at the beam level for the largest beam size. When the beam size is small or medium, the cell may contain more than one beam. However, the cumulative differential delay of all beams in the cell does not exceed the maximum differential delay at the cell level in Table 8. | | |

NTN-related descriptions in this disclosure may be applied to NTN GEO scenarios and all NGSO (non-geostationary orbit) scenarios with circular orbits with an altitude of 600 km or more.

In addition, the above-described contents (NR frame structure, NTN, etc.) may be applied in combination with methods to be described later, and may be supplemented to clarify the technical characteristics of the method described in the present disclosure.

### NTN PRACH repetition and Msg. 3 PUSCH repetition transmission and reception method

To improve UL coverage of a basic wireless communication system, a PRACH preamble repetition transmission operation may be performed. Hereinafter, a method for a UE to enable PRACH preamble repetition transmission (or/and Msg. 3 PUSCH repetition transmission) according to an embodiment of the present disclosure will be described in detail.

Here, in the 4-step RACH procedure, Msg. 1 (message 1) may include a preamble (i.e., a PRACH preamble). Msg. 2 may include a random access response (RAR) corresponding to Msg 1. Msg. 3 may include a PUSCH based on uplink resource allocation information provided by the RAR.

The present disclosure may be applied in combination with the above-described contents (e.g., NR frame structure, RACH procedure, U-band system, etc.). In addition, the methods related to configuring PRACH transmission occasions to be described later may be equally applied to an uplink signal transmission and reception method.

For example, uplink transmission through methods related to PRACH transmission opportunity configuration described later can be performed in an L-cell and/or U-cell defined in an NR system or a U-Band system.

FIG. 9 is a diagram for describing an uplink transmission operation of a UE in a wireless communication system to which the present disclosure may be applied.

The UE receives configuration information related to a plurality of UL segments corresponding to each of a plurality of SSB (synchronization signal block) indexes from the base station (S910).

The UE may receive configuration information related to a plurality of UL segments from the base station through at least one of SIB (system information block) or RRC (radio resource control) signaling.

The UE may independently receive specific N PRACH preambles (or specific N ROs (having the same beam)) from the base station for different beam directions as values for UL segments. That is, a specific number of PRACH preambles can be mapped/configured/indicated/defined for each SSB index. Accordingly, the UE may be configured with UL segments for each SSB index by the base station.

The UE performs repeated transmission of a PRACH preamble in a period corresponding to the first UL segment among a plurality of UL segments (S920).

Here, the first UL segment corresponds to a specific SSB index selected by the UE from among a plurality of SSB indices. The UE may repeatedly transmit the PRACH preamble a specific number of times within the period corresponding to the first UL segment.

For example, if a first UL segment corresponding to a specific SSB index is configured with N PRACH preambles, the UE may perform N repeated PRACH transmissions in the period corresponding to the first UL segment.

In addition, the same UL TA (timing advance) value may be applied to the PRACH preamble repeated transmission performed in the period corresponding to the first UL segment. That is, the UL TA value may be maintained as the same value within a unit UL segment.

For example, within the period corresponding to the first UL segment, the UE may not receive signaling from the base station for updating information related to NTN (e.g., common TA parameters and ephemeris information).

Even if the UE receives signaling for updating information related to NTN from the base station within the period corresponding to the first UL segment, the UE maintains the UL TA value applied for repeated transmission of PRACH preamble within the period corresponding to the first UL segment.

Additionally or alternatively, based on the validity duration corresponding to the information related to the NTN expiring during the interval corresponding to the first UL segment, the UL TA based on the information related to the NTN may be maintained. That is, even if the validity duration expires during the interval corresponding to the first UL segment, the UE may maintain the existing UL TA value.

And, the plurality of UL segments may include a first UL segment and a second UL segment corresponding to a specific SSB index subsequent to the first UL segment. However, this is only one embodiment, and the number of segments corresponding to a specific SSB index may be implemented as various values.

Here, the UE may determine whether the parameter for the UL TA used in the period corresponding to the first UL segment after the first UL segment ends is valid. If the parameter for the UL TA is valid, the UE may calculate a new UL TA based on the valid parameter.

And, a timing gap may be configured or predefined by the base station between the period corresponding to the first UL segment and the section corresponding to the second UL segment. That is, the UE may use the timing gap to calculate a UL TA for a new UL segment.

As another example of the present disclosure, the UE may transmit/report signaling to the terminal to request a change in the number of PRACH preambles corresponding to a specific SSB index. Accordingly, the base station may change the number of PRACH preambles corresponding to the specific SSB index.

FIG. 10 is a diagram for describing an uplink reception operation of a base station in a wireless communication system to which the present disclosure may be applied.

The base station transmits configuration information related to a plurality of UL segments corresponding to each of a plurality of SSB indices to the UE (S1010).

The base station may independently provide specific N PRACH preambles (or specific N (ROs having the same beam)) to the UE for different beam directions as values for the UL segment. That is, a specific number of PRACH preambles may be mapped/configured/indicated/defined for each SSB index.

However, this is only one embodiment, and values for UL segments may be predefined.

The base station performs repeated reception of a physical random access channel (PRACH) preamble in a period corresponding to a first UL segment among a plurality of UL segments (S1020).

The operations and parameters related to S910 and S920 correspond to the operations and parameters related to S101C and S1020, and therefore, any duplicate description will be omitted.

The following describes in detail how to perform PRACH preamble repetition transmission and/or Msg. 3 PUSCH repetition transmission in NTN.

### Embodiment 1

Embodiment 1 relates to a method of repeating transmission of PRACH preamble and/or Msg. 3 PUSCH (or, Msg. A preamble/PUSCH) in NTN.

When the NR NTN system repeatedly transmits the PRACH preamble and/or Msg. 3 PUSCH (or, Msg. A preamble/PUSCH) due to a large delay, the UL TA (timing advance) may be configured to change in the middle of transmitting the UL signal/channel.

For basic NTN IoT, when a UE transmits a UL signal/channel (e.g., PRACH, PUSCH, PUCCH, etc.), the unit for configuring the UL TA value (same) may be defined as a UL transmission segment. The base station may independently configure/indicate the UE to configure/indicate the UL transmission segment value for each UL signal/channel.

For PRACH transmission in basic NTN IoT, the base station may identify the preamble repetition unit as a basic unit and configure/indicate the UE to configure specific N preamble repetition units as UL transmission segments through higher layer signaling.

Similarly, in NR NTN, when performing preamble repetition transmission by defining/configuring a single preamble as the basic unit of repetition, the UE may select a specific RO among the ROs set according to the PRACH configuration, considering SSB-to-RO mapping, etc., and perform preamble repetition transmission in the specific RO.

Here, the base station may identify a single preamble as a basic unit and configure specific N preambles (or a specific number of ROs (having the same beam)) as UL transmission segments. And, the base station may configure/indicate the UL transmission segment to the UE through higher layer signaling **(e.g.,** SIB and/or RRC signaling, etc.).

When a UL transmission segment is configured/indicated to a UE as described above, some UEs may be configured/indicated to occupy a (more than necessary) longer period of time by ROs grouped into the same segment through PRACH configuration and SSB-to-RO mapping, etc.

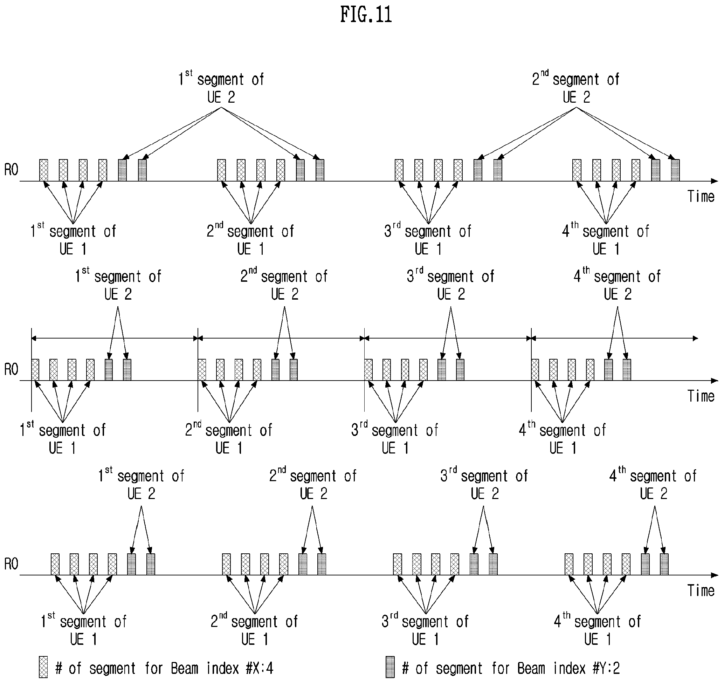

As an embodiment of the present disclosure, referring to (a) of FIG. 11, a base station may indicate/configure four preambles (or four ROs) to a UE with UL segment values. Terminals (UE) 1 and UE 2 may select different beam directions (i.e., different SSB indices), and PRACH UL segmentation may be configured according to SSB-to-RO mapping.

Here, in the case of UE 1, since four preamble repetition transmissions may be performed within nearby ROs, there may be no problem even if the UL TAs related to the repeated transmissions of terminal 1 are configured identically. However, in the case of UE 2, since four preamble repetition transmissions are performed based on distant ROs, it may not be desirable to configure the UL TAs related to the repeated transmissions of UE 2 identically.

Hereinafter, a method for solving the above-described problem is described.

### Embodiment 1-1

The base station may configure/indicate the UE via higher layer signaling (e.g., SIB or RRC signaling) a specific time (e.g., in ms units, slot units, or RACH association units) as a value for UL segmentation (i.e., UL segment value).

If the value for UL segmentation is configured to a specific time (e.g., in ms), the UE may be configured to configure the UL TA for the preamble(s) to be repeatedly transmitted to the same value for a specific time indicated by the base station from the time point of starting the preamble repetition transmission (or, the ROs (selected for repeated transmission) existing within the specific time) (or, from the start point of the first OFDM symbol of the RO selected to start the preamble repetition transmission, or from the start point of the first OFDM symbol of the RACH slot in which the RO selected to start the preamble repetition transmission exists) .

Specifically, when the value for UL segmentation is configured/indicated on a slot basis, the UE may configure the UL TA to the same value in the ROs that exist during the slot in which the RO selected by the UE exists and the number of consecutive (or non-consecutive) slots (or RACH slots) indicated by the base station to start preamble repetition transmission, and transmit the preamble.

For example, as shown in (b) of FIG. 11, it is assumed that the base station indicates 1 slot as a value for UL segmentation to the UE. In this case, the UE 1 may be configured to maintain the same UL TA when transmitting four preamble repetitions (in one slot). And the UE 2 may be configured to maintain the same UL TA when transmitting two preamble repetitions (in one slot).

### Embodiment 1-2

The base station may provide specific N preambles (or specific N ROs (having the same beam)) independently to the terminals for different beam directions (or SSB indexes or RO (groups)) as values for UL segmentation.

That is, as shown in (c) of FIG. 11, if the beam corresponding to the SSB selected by UE 1 is beam index #X, the base station may configure a total of 4 preambles (or, RO) for beam index #X as UL segmentation values. And, if the beam corresponding to the SSB selected by UE 2 is beam index #Y, the base station may configure a total of 2 preambles (or, RO) for beam index #Y as UL segmentation values.

The UE may configure the UL segmentation value differently (i.e., independently) according to the SSB index selected by the UE. When transmitting a PRACH preamble corresponding to the set UL segmentation value, the UE may maintain the UL TA value and perform preamble repetition transmission.

### Embodiment 1-3

The UL segment value may be predefined. For example, the UL segment value may be predefined as a plurality of a radio frame or a plurality of a RACH association period.

Additionally or alternatively, the base station may configure/indicate the UL segment value to the UE via higher layer signaling (e.g., SIB or RRC signaling, etc.).

For example, when a base station configures/indicates a UL segment value to a UE through upper layer signaling, the UE may be configured to perform preamble repetition transmission using a UL TA corresponding to each UL segment value configured/indicated by the base station.

As another example, if the base station does not provide a parameter indicating a UL segment value to the UE (or, if the signaling related to the UL segment is configured to 0, or/and does not configure/indicate a UL segment value to the UE), the UE may be configured to perform preamble repetition transmission using the UL TA corresponding to each predefined UL segment value.

Additionally or alternatively, if the base station does not provide a parameter indicating a UL segment value to the UE (or, if the signaling related to the UL segment is configured to 0, or/and does not configure/indicate a UL segment value to the UE), the UE may be configured to apply the corresponding UL TA to all preamble repetition transmissions without changing the UL TA applied to the initial preamble transmission.

### Embodiment 1-4

If the base station configures/indicates the UL segment unit value to the UE, the UE may perform an operation of requesting/reporting a change in the corresponding UL segment unit value. That is, if the UL segment unit value configured/indicated by the base station is used, the UE may have to use the same UL TA for repeated preamble transmission for an unnecessarily long time.

Accordingly, the UE may perform a change request operation of a UL segment unit indicated/configured by the base station. The change request operation of a UL segment unit may be performed/applied at the time of initial access. As another example, when performing/applying a preamble repetition in a connected mode, the change request operation of a UL segment unit may be performed/applied.

### Embodiment 1-5

When repeated preamble transmission within the same UL segment is finished, the UE may perform repeated preamble transmission within the next UL segment. To this end, the UE may determine whether parameters for UL TA (related to the next UL segment) (e.g., UE-specific TA, common TA, K-offset, etc.) are still valid. If the parameters for UL TA are valid, the UE may recalculate the UL TA based on the parameters for UL TA.

Additionally or alternatively, the UE may determine whether the GNSS (global navigation satellite system) value (i.e., GNSS position fix value), which is information for calculating the position of the UE, is still valid.

Here, an appropriate timing gap between UL segments may not be guaranteed due to a combination of the PRACH configuration set by the base station, SSB-to-RO mapping, UL segment value (or UL segmentation value), etc. In this case, the UE must recalculate the UL TA for a new UL segment, and thus can arbitrarily generate an appropriate timing gap. The generation of the timing gap may be performed through a method such as RO (PRACH preamble) dropping, puncturing, or scrambling.

As another example, the base station may (explicitly) configure/indicate the UE to configure/indicate a timing gap between UL segments for UL TA recalculation. In this case, the timing gap may be configured/indicated to the UE at the RO level or/and (RACH) slot level.

When an explicit timing gap is indicated/configured, the UE may be configured to recalculate UL TA for the UL segment without performing PRACH repeat transmission in the timing gap. That is, the UE may determine that the ROs included in the timing gap are invalid ROs.

After this, the UE may be configured to repeatedly perform the above-described operation until it finishes repeating the (preamble) transmission for the number of times set by the base station. For this purpose, values that can be segment values less than or equal to 2k (e.g., powers of 2 (e.g., 2, 4, 8, 16, 32, 64, 128, 256, etc.)) may be defined in advance. The base station may configure/indicate the UE to the UL segment value using K (e.g., K=3) bits through higher layer signaling.

Additionally or alternatively, if the number of repetition transmissions configured by the base station is sufficiently small to maintain the same UL TA value, the base station may not separately indicate/configure the UL segment value to the UE. That is, if the base station does not indicate/configure the UL segment value (or indicates/configures the UL segment value to 0 or infinity), the UE may be configured to maintain the same UL TA value for the number of repetition transmissions configured by the base station.

That is, although the UL segment value is not explicitly indicated/configured by the base station, the UE may determine that the UL segment value is equal to the number of repeated transmissions set by the base station. Then, the UE may perform repeated transmission while maintaining the UL TA the same during the corresponding UL segment value.

### Embodiment 1-6

When the UL segment value is indicated/configured on a slot basis, the UE may interpret the UL segment value as a value set based on the reference SCS of the PRACH.

For example, it is assumed that when SCS 1 (e.g., SCS 1 = 15 kHz, µ₁ = 0) is configured in a specific frequency region, the base station configures SCS 2 (e.g., SCS 2 = 30 kHz, µ₂ = 1) for the PRACH preamble. If the slot-based UL segment value indicated by the base station through actual higher layer signaling is N slots, the UE may interpret and operate the value obtained by multiplying the N value by SCS 2/SCS 1 (e.g., 30/15 = 2 or 2^{(µ₂}-^{µ₁}) (e.g., 2¹⁻⁰ = 2)) as the UL segment value (e.g., 2^{(µ2}-^{µ1}) X N = 2N slots).

Additionally, if the UL segment value is indicated on a slot basis and the UL segment value indicates a PRACH preamble (or, Msg. A preamble), the UE may interpret the UL segment value as a value set based on the SCS of the preamble indicated in the PRACH configuration.

Therefore, if the SCS of the PRACH preamble is configured to SCS 1 (e.g., SCS 1 = 15 kHz, µ₁ = 0) and the SCS of the UL BWP is configured to SCS 2 (e.g., SCS 2 = 30 kHz, µ₂ = 1), the UE may interpret and operate the UL segment value for UL signals/channels other than the PRACH preamble as a value obtained by multiplying the UL segment value of the PRACH preamble by SCS 2/SCS 1 (e.g., 30/15=2 or 2^{(µ2}-^{µ1}) (e.g., 2¹⁻⁰=2)).

Additionally, it is assumed that the UL segment value is indicated on a slot basis and that the corresponding UL segment value corresponds to Msg. 3 PUSCH (or Msg. A PUSCH, or normal PUSCH/PUCCH). In this case, the UE may interpret that the corresponding UL segment value is a value set based on the SCS of the UL BWP.

Similar to the method described above, the UL segment of the PRACH preamble may be acquired/generated based on the SCS of the PRACH preamble and/or the UL BWP.

### Embodiment 1-7

In a period where the UE performs UL signal/channel repetition transmission (or a period corresponding to a UL segment), the base station may not update additional information (i.e., common TA parameters and ephemeris information).

Additionally or alternatively, during the period of performing UL signal/channel repetition transmission, even if the base station indicates/provides an update on additional information via higher layer signaling **(e.g.,** NTN specific SIB), the UE may be configured not to update the UL TA **(e.g., UE** specific TA, common TA, or full TA). That is, during the period of performing the transmission operation while maintaining the UL TA at the same value, the UE may be configured not to update the UL TA.

However, in order to prevent the validity duration from expiring during the UL signal/channel repetition transmission (or during the section corresponding to the UL segment), the base station may appropriately set the validity duration for the UE.

However, if the base station fails to properly configure the valid duration for the UE (i.e., the valid duration is configured to expire while performing a repeat transmission within the UL segment), the UE may determine that the UL synchronization is no longer valid. After that, the UE may no longer perform a repeat transmission.

To avoid the above-described case, the UE may be configured to perform UL transmission while maintaining the existing UL TA even if the valid interval expires during the UL segment. Then, the UE may be configured to restart the valid duration as the base station updates additional information before the subsequent UL segment. Alternatively, the timer value of the valid duration may be defined to remain unchanged **(i.e.,** not decrease or decrement) during the UL segment.

### Embodiment 1-8

The base station may independently configure/indicate to the UE the UL segment value for at least one of the PRACH preamble, Msg. 3 PUSCH, PUSCH, or PUCCH, etc., via specific signaling (e.g., SIB, RRC, MAC-CE, RAR grant, DCI, etc.).

As described above, if the UL segment values are defined so that they can be configured independently for each UL signal/channel, the degree of freedom in terms of system configuration of the base station can be increased. However, the method described above may increase signaling overhead.

Therefore, the base station may configure the same UL segment value for multiple UL signals/channels through one signaling. For example, the base station may configure the UL segment values related to PRACH preamble, Msg. 3 PUSCH, PUCCH (or Msg. A preamble/PUSCH, PUCCH), etc. to the same value in order to perform an initial access procedure.

As another example, the base station may configure/indicate the UE for each UL segment value to be applied to the UL signal/channel when performing the initial access procedure and each UL segment value to be applied to the UL signal/channel after entering the connected mode.

The UL segment values for PRACH preamble and/or Msg. 3 PUSCH may be configured for the UE via higher layer signaling (e.g., SIB, RRC signaling).

However, if repeated transmission of PRACH preamble is not allowed and only repeated transmission of Msg. 3 PUSCH is allowed, the base station may configure/indicate the UL segment value of **Msg.** 3 PUSCH to the UE through RAR UL grant (or UL grant on DCI format 0_0 for **Msg.** 3 PUSCH retransmission).

Specifically, for contention free random access (CFRA), the UL segment value for the PRACH preamble may be configured/indicated via UE-specific RRC signaling.

If a separate UL segment value is not configured for a specific UL signal/channel, the UE may use the UL segment value configured for another UL signal/channel as a separate UL segment value for the specific UL signal/channel.

For example, assume that the base station does not separately provide the UL segment value for PUCCH or normal PUSCH after indicating the UL segment value for Msg. 3 PUSCH (or Msg. A PUSCH) to the UE. The UE may be configured to apply the UL segment value for Msg. 3 PUSCH (or Msg. A PUSCH) to PUCCH or normal PUSCH.

As another example, assume that the base station indicates to the UE the UL segment value for Msg. 3 PUSCH (or Msg. A PUSCH) and does not separately indicate the UL segment value for Msg. 3 PUSCH (or Msg. A PUSCH) retransmission. In this case, the UE may be configured/defined to determine that the UL segment for **Msg.** 3 PUSCH (or **Msg.** A PUSCH) retransmission is identical to the UL segment value for **Msg.** 3 PUSCH (or **Msg.** A PUSCH) that was initially configured/indicated.

### Embodiment 2

Embodiment 2 relates to a method for selecting different beams when repeatedly transmitting a PRACH preamble and/or a Msg. 3 PUSCH (or, Msg. A preamble/PUSCH) in an NTN.

When a satellite moves quickly, the direction of the best UL beam for a UE to select may also change over time. For this, additional UE/base station operations need to be set up.

During one or a plurality of consecutive UL segments configured by the base station, the UE may be configured to perform preamble repetition transmission by selecting ROs corresponding to the same UL beam (i.e., ROs associated with the same SSB index). In the subsequent one or multiple consecutive UL segments, the UE may be configured to perform preamble repetition transmission by selecting ROs corresponding to a different UL beam from the previously selected UL beam.

To this end, the base station may configure/indicate the UE via higher layer signaling the mapping order (e.g., SSB index) of UL beams to be selected by the UE for each of one or more UL segments (sequentially) so that the UE may perform UL beam switching. As another example, the base station may be configured to follow a predefined mapping order of UL beams.

That is, the base station may determine UL beam values that may be (sequentially) selected based on the UL beam value initially selected by the UE and configure/indicate the UE to do so.

For example, if the UL beam initially selected by the UE is UL beam #A, it can be assumed that the UE subsequently selects UL beams in the order of UL beam #B and UL beam #C. As another example, if the UL beam initially selected by the UE is UL beam #B, it may be assumed that the UE subsequently selects UL beams in the order of UL beam #C and UL beam #D.

Generally, the direction in which a satellite moves is determined in advance, so the order of UL beam indices that a UE may select can be defined/configure to proceed in one direction.

Here, the base station may know in advance in which order the subsequent UEs will select the UL beams based on the initially selected UL beam index. Accordingly, even if a specific UE transmits a preamble by changing the RO (i.e., changing the UL beam index) after one or more UL segments have passed, the base station may merge and receive them.

### Embodiment 2-1

A base station may configure a plurality of SSB-to-RO mapping values for a UE through higher layer signaling.

For example, the SSB-to-RO mapping value may be configured to be N during a specific time period (e.g., a multiple of the RACH association period), but the SSB-to-RO mapping value may be configured to change to M during the next time period.

As configured above, a UE indicated to use the same UL beam across all repeated transmissions may be configured to change the RO to select as the SSB-to-RO mapping changes. On the other hand, a UE allowed to re-establish an appropriate UL beam index for each UL segment may select a new RO based on the changed SSB-to-RO mapping value.

Additionally, the base station may independently configure, for the UE, a UL segment value that can be used for at least one of a SSB index (or a UL beam index), a preamble group, or a RO/RO group. Thereafter, the UE may select a UL segment value that satisfies a specific criterion. The UE may be configured to select a RACH preamble (or/and RO) to be repeatedly transmitted among the preambles (or/and ROs) associated with the UL segment value selected by the UE.

Additionally, when a satellite moves quickly, the reception sensitivity in a specific UL beam direction may increase only at a specific time depending on the satellite's position. Therefore, to effectively utilize this situation, the SSB-to-RO mapping configured by the base station may be configured differently (i.e., not uniformly) for each UL beam index.

That is, rather than configuring the RO allocation value uniformly for different beams (i.e., SSB indices having different DL beams) based on a single SSB-to-RO mapping value, the base station may independently (i.e., non-uniformly) configure the RO allocation value for different beams (i.e., SSB-to-RO mapping for beam index X) (during a specific time period) .

In a specific way, a method may be considered in which a base station allocates a relatively large number of ROs to a specific UL beam index during a specific period of time (e.g., during a UL segment). For example, during a specific period, a plurality of ROs (e.g., a majority of ROs from the first RO) of a RACH period may be configured to be allocated to UL beam index #A, and the remaining ROs may be set to be allocated to the remaining UL beam indexes. During another specific period, a plurality of ROs of a RACH period may be set to be allocated to UL beam index #B, and the remaining ROs may be configured to be allocated to the remaining UL beam indexes.

Here, the base station may transmit to the terminal, through upper layer signaling, information about the order in which UL beam indices are selected, and/or how many ROs are allocated for each UL beam index, and/or for how long the allocated ROs are allocated.

The UE receiving the above information may be configured to perform repeated transmission by selecting a RO corresponding to an appropriate UL beam index for each UL segment. If the UE selects UL beam indices allocated to a plurality of ROs for each specific time period, the UE may select RO(s) for each UL segment and repeatedly transmit the preamble while changing the UL beam direction.

The above-described embodiments may be configured/applied to other UL signals/channels such as PUSCH/PUCCH. In addition, the above-described embodiments can also be included as one of the implementation methods of the present disclosure. In addition, the above-described embodiments may be implemented independently, but can also be implemented in the form of a combination (or merge) of some embodiments. Information on whether the above-described embodiments are applied (or information on the rules of the above-described embodiments) may be defined so that the base station notifies the UE through a predefined signal (e.g., a physical layer signal or a higher layer signal). The higher layer may include, for example, one or more of functional layers such as MAC, RLC, PDCP, RRC, and SDAP.

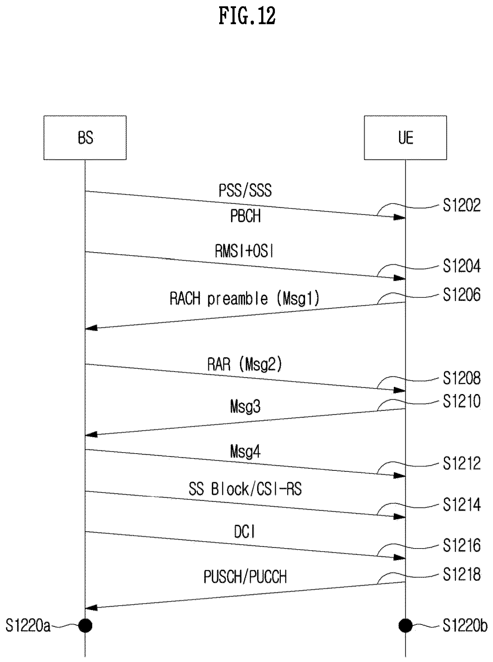

FIG. 12 is a diagram for describing the signaling procedure of the network side and the UE according to an embodiment of the present disclosure.

FIG. 12 shows an example of signaling between a network side and a terminal (UE) in an M-TRP situation to which the Embodiments (e.g., Embodiment 1, Embodiment 1-1, Embodiment 1-2, Embodiment 1-3, Embodiment 1-4, Embodiment 1-5, Embodiment 1-6, Embodiment 1-7, Embodiment 2, Embodiment 2-1 or a combination of one or more of the detailed Embodiments) of the present disclosure described above may be applied.

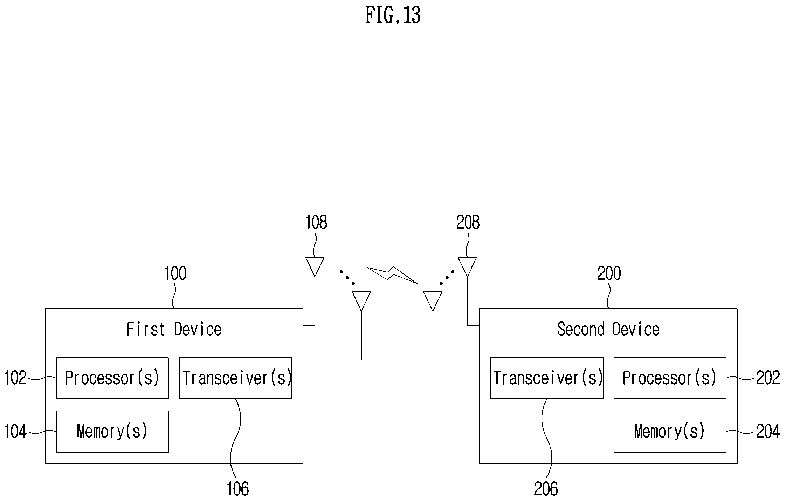

Here, the UE/network side is an example and may be replaced with various devices as described with reference to FIG. 13. FIG. 12 is for convenience of explanation and does not limit the present disclosure. Additionally, some step(s) shown in FIG. 12 may be omitted depending on the situation and/or settings. Additionally, in the operation of the network side/UE in FIG. 12, the above-described uplink transmission/reception operation, M-TRP-related operation, etc. may be referenced or used.

In the following description, the network side may be one base station including multiple TRPs, or may be one cell including multiple TRPs. Alternatively, the network side may include a plurality of remote radio heads (RRH)/remote radio units (RRU). For example, ideal/non-ideal backhaul may be set between TRP 1 and TRP 2, which constitute the network side. In addition, the following description is based on multiple TRPs, but it can be equally extended and applied to transmission through multiple panels/cells, and can also be extended and applied to transmission through multiple RRHs/RRUs, etc.

In addition, it is described based on a "TRP" in the following description, but as described above, a "TRP" may be applied by being substituted with an expression such as a panel, an antenna array, a cell (e.g., a macro cell/a small cell/a pico cell, etc.), a TP (transmission point), a base station (gNB, etc.), etc. As described above, a TRP may be classified according to information on a CORESET group (or a CORESET pool) (e.g., a CORESET index, an ID).

For example, if a single UE is configured to transmit and receive with multiple TRPs (or cells), this may mean that multiple CORESET groups (or CORESET pools) are configured for the single terminal. The configuration of such CORESET groups (or CORESET pools) may be performed via higher layer signaling (e.g., RRC signaling, etc.).

In addition, a base station may generally mean an object which performs transmission and reception of data with a terminal. For example, the base station may be a concept which includes at least one TP (Transmission Point), at least one TRP(Transmission and Reception Point), etc. In addition, a TP and/or a TRP may include a panel, a transmission and reception unit, etc. of a base station.

Referring to Fig. 12, a base station (e.g., BS) may periodically transmit SSB to a terminal (S1202). Here, the SSB may include PSS/SSS/PBCH. The base station may transmit SSB to a UE using beam sweeping.

The base station may transmit remaining minimum system information (RMSI) and other system information (OSI) to the terminal (S1204). RMSI may include information required for the terminal to initially access the base station (e.g., PRACH configuration information). Here, the UE may identify the best SSB after performing SSB detection.

Thereafter, the UE may transmit a RACH preamble (Message 1, Msg1) to the base station using the PRACH resource linked/corresponding to the index (i.e., beam) of the best SSB (S1206).

The beam direction of the RACH preamble may be associated with a PRACH resource. The association between the PRACH resource (and/or the RACH preamble) and the SSB index can be established via system information (e.g., RMSI).

Here, the UE may perform PRACH preamble repetition transmission. The UE may perform PRACH preamble repetition transmission based on configuration information related to PRACH repetition transmission received from the base station.

Thereafter, as part of the RACH process, the base station may transmit a Random Access Response (RAR) (Msg2) to the terminal in response to the PRACH preamble (S1208).

The RAR may include at least one of a field related to PUSCH repeated transmission, a field for indicating whether to repeat PUSCH preamble transmission, or a PUSCH time/frequency resource field.

The UE may transmit Msg. 3 PUSCH **(e.g.,** RRC Connection Request) using the uplink grant in the RAR (S1210).

The UE may perform PUSCH repeated transmission based on RAR. Here, the number of PUSCH repeated transmissions may be based on the number of PRACH preamble repeated transmissions.

The base station may transmit a contention resolution message (Msg4) to the terminal (S1212). Msg4 may include RRC connection setup.

When an RRC connection is established between a base station and a UE through the RACH process, subsequent beam alignment may be performed based on SSB/CSI-RS (in downlink) and SRS (in uplink). For example, the UE may receive SSB/CSI-RS (S1214). SSB/CSI-RS may be used by the UE to generate beam/CSI report.

And, the base station may request the UE to report beam/CSI through DCI (S1216). Here, the UE may generate the beam/CSI report based on SSB/CSI-RS and transmit the generated beam/CSI report to the base station through PUSCH/PUCCH (S1218). The beam/CSI report may include beam measurement results, information about preferred beams, etc. The base station and the UE may switch beams based on the beam/CSI report (S1220a, S1220b).

Thereafter, the UE and the base station may perform the embodiments described/proposed above. For example, the UE and the base station may process information in the memory and transmit a wireless signal or process a received wireless signal and store it in the memory based on the configuration information obtained in the network access procedure (e.g., system information acquisition procedure, RRC connection procedure via RACH, etc.) according to the embodiment of the present disclosure. Here, the wireless signal may include at least one of PDCCH, PDSCH, and RS (Reference Signal) in the case of downlink, and at least one of PUCCH, PUSCH, and SRS in the case of uplink.

### General Device to which the Present Disclosure may be applied

FIG. 13 is a diagram which illustrates a block diagram of a wireless communication system according to an embodiment of the present disclosure.

In reference to FIG. 13, a first device 100 and a second device 200 may transmit and receive a wireless signal through a variety of radio access technologies (e.g., LTE, NR).

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts included in the present disclosure.

For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104.

A memory 104 may be connected to a processor 102 and may store a variety of information related to an operation of a processor 102. For example, a memory 104 may store a software code including commands for performing all or part of processes controlled by a processor 102 or for performing description, functions, procedures, proposals, methods and/or operation flow charts included in the present disclosure. Here, a processor 102 and a memory 104 may be part of a communication modem/circuit/chip designed to implement a wireless communication technology **(e.g.,** LTE, NR). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a wireless device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts included in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including commands for performing all or part of processes controlled by a processor 202 or for performing description, functions, procedures, proposals, methods and/or operation flow charts included in the present disclosure. Here, a processor 202 and a memory 204 may be part of a communication modem/circuit/chip designed to implement a wireless communication technology **(e.g.,** LTE, NR). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a wireless device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers **(e.g.,** a functional layer such as PHY, MAC, RLC, PDCP, RRC, SDAP). One or more processors 102, 202 may generate one or more PDUs (Protocol Data Unit) and/or one or more SDUs (Service Data Unit) according to description, functions, procedures, proposals, methods and/or operation flow charts included in the present disclosure. One or more processors 102, 202 may generate a message, control information, data or information according to description, functions, procedures, proposals, methods and/or operation flow charts included in the present disclosure. One or more processors 102, 202 may generate a signal **(e.g.,** a baseband signal) including a PDU, a SDU, a message, control information, data or information according to functions, procedures, proposals and/or methods disclosed in the present disclosure to provide it to one or more transceivers 106, 206.

One or more processors 102, 202 may receive a signal **(e.g.,** a baseband signal) from one or more transceivers 106, 206 and obtain a PDU, a SDU, a message, control information, data or information according to description, functions, procedures, proposals, methods and/or operation flow charts included in the present disclosure. One or more processors 102, 202 may be referred to as a controller, a micro controller, a micro processor or a micro computer. One or more processors 102, 202 may be implemented by a hardware, a firmware, a software, or their combination. In an example, one or more ASICs (Application Specific Integrated Circuit), one or more DSPs(Digital Signal Processor), one or more DSPDs(Digital Signal Processing Device), one or more PLDs(Programmable Logic Device) or one or more FPGAs (Field Programmable Gate Arrays) may be included in one or more processors 102, 202. Description, functions, procedures, proposals, methods and/or operation flow charts included in the present disclosure may be implemented by using a firmware or a software and a firmware or a software may be implemented to include a module, a procedure, a function, etc. A firmware or a software configured to perform description, functions, procedures, proposals, methods and/or operation flow charts included in the present disclosure may be included in one or more processors 102, 202 or may be stored in one or more memories 104, 204 and driven by one or more processors 102, 202. Description, functions, procedures, proposals, methods and/or operation flow charts included in the present disclosure may be implemented by using a firmware or a software in a form of a code, a command and/or a set of commands.

One or more memories 104, 204 may be connected to one or more processors 102, 202 and may store data, a signal, a message, information, a program, a code, an instruction and/or a command in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. included in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. included in the present disclosure through one or more antennas 108, 208. In the present disclosure, one or more antennas may be a plurality of physical antennas or a plurality of logical antennas **(e.g.,** an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment.

It is clear to a person skilled in the pertinent art that the present disclosure may be implemented in other specific form not going beyond an essential feature of the present disclosure. Accordingly, the above-described detailed description should not be restrictively construed in every aspect and should be considered to be illustrative.

The present disclosure includes software or machine-executable commands **(e.g.,** an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

Here, a wireless communication technology implemented in a device 100, 200 of the present disclosure may include Narrowband Internet of Things for a low-power communication as well as LTE, NR and 6G. Here, for example, an NB-IoT technology may be an example of a LPWAN(Low Power Wide Area Network) technology, may be implemented in a standard of LTE Cat NB1 and/or LTE Cat NB2, etc. and is not limited to the above-described name. Additionally or alternatively, a wireless communication technology implemented in a wireless device 100, 200 of the present disclosure may perform a communication based on a LTE-M technology. Here, in an example, a LTE-M technology may be an example of a LPWAN technology and may be referred to a variety of names such as an eMTC (enhanced Machine Type Communication), etc. For example, an LTE-M technology may be implemented in at least any one of various standards including 1) LTE CAT 0, 2) LTE Cat M1, 3) LTE Cat M2, 4) LTE non-BL(non-Bandwidth Limited), 5) LTE-MTC, 6) LTE Machine Type Communication, and/or 7) LTE M and so on and it is not limited to the above-described name. Additionally or alternatively, a wireless communication technology implemented in a wireless device 100, 200 of the present disclosure may include at least any one of a ZigBee, a Bluetooth and a low power wide area network (LPWAN) considering a low-power communication and it is not limited to the above-described name. In an example, a ZigBee technology may generate PAN (personal area networks) related to a small/low-power digital communication based on a variety of standards such as IEEE 802.15.4, etc. and may be referred to as a variety of names.

### [Industrial Applicability]

A method proposed by the present disclosure is mainly described based on an example applied to 3GPP LTE/LTE-A, 5G system, but may be applied to various wireless communication systems other than the 3GPP LTE/LTE-A, 5G system.

## Claims

1. A method comprising:
receiving, by a user equipment, UE (100, 200), from a base station (200, 100), configuration information related to a plurality of uplink, UL, segments related to each of a plurality of synchronization signal block, SSB, indices (S910); and
performing, by the UE (100, 200), repeated transmission of a physical random access channel, PRACH, preamble in a period related to a first UL segment among the plurality of UL segments (S920, S1206),
wherein the first UL segment corresponds to a specific SSB index selected by the UE (100, 200) among the plurality of SSB indices, and
**characterized in that**, based on a signaling to update information related to non-terrestrial network, NTN, being received from the base station (200, 100) within the period related to the first UL segment, a UL timing advance, TA, value applied to the repeated transmission of the PRACH preamble within the period related to the first UL segment is maintained.

2. The method of claim 1, wherein:
a same UL TA value is applied to the repeated transmission of the PRACH preamble in the period related to the first UL segment.

3. The method of claim 1, wherein:
a specific number of PRACH preambles are mapped to the specific SSB index, and
the specific number of PRACH preambles are repeatedly transmitted within the period related to the first UL segment.

4. The method of claim 3, wherein:
a signal is transmitted to the base station (200, 100) to request a change in a number of PRACH preambles related to the specific SSB index.

5. The method of claim 1, wherein:
based on a validity duration for the information related to the NTN expiring during the period related to the first UL segment, the UL TA based on the information related to the NTN is maintained.

6. The method of claim 1, wherein:
the plurality of UL segments include a first UL segment and a second UL segment related to the specific SSB index subsequent to the first UL segment, and
whether a parameter for the UL TA used in the period related to the first UL segment is valid after the first UL segment ends is determined by the UE (100, 200).

7. The method of claim 6, wherein:
a timing gap is configured or predefined by the base station (200, 100) between the period related to the first UL segment and a period related to the second UL segment.

8. The method of claim 1, wherein:
the configuration information is received from the base station (200, 100) through at least one of system information block, SIB, or radio resource control, RRC, signaling.

9. A user equipment, UE (100, 200), comprising:
at least one transceiver (106, 206); and
at least one processor (102, 202) connected to the at least one transceiver (106, 206),
wherein the at least one processor (102, 202) is configured to:
receive, from a base station (200, 100) through the at least one transceiver (106, 206), configuration information related to a plurality of uplink, UL, segments related to each of a plurality of synchronization signal block, SSB, indices (S910); and
perform repeated transmission of a physical random access channel, PRACH, preamble in a period related to a first UL segment among the plurality of UL segments (S920, S1206),
wherein the first UL segment corresponds to a specific SSB index selected by the UE (100, 200) among the plurality of SSB indices, and
**characterized in that**, based on a signaling to update information related to non-terrestrial network, NTN, being received from the base station (200, 100) within the period related to the first UL segment, a UL timing advance, TA, value applied to the repeated transmission of the PRACH preamble within the period related to the first UL segment is maintained.

10. A base station (200, 100) comprising:
at least one transceiver (106, 206); and
at least one processor (102, 202) connected to the at least one transceiver (106, 206),
wherein the at least one processor (102, 202) is configured to:
transmit, to a user equipment, UE (100, 200), through the at least one transceiver (106, 206), configuration information related to a plurality of uplink, UL, segments related to each of a plurality of synchronization signal block, SSB, indices (S1010); and
perform repeated reception of a physical random access channel, PRACH, preamble in a period related to a first UL segment among the plurality of UL segments (S1020),
wherein the first UL segment corresponds to a specific SSB index selected by the UE (100, 200) among the plurality of SSB indices, and
**characterized in that**, based on a signaling to update information related to non-terrestrial network, NTN, being transmitted from the base station (200, 100) within the period related to the first UL segment, a UL timing advance, TA, value applied to the repeated reception of the PRACH preamble within the period related to the first UL segment is maintained.

## Patentansprüche

1. Verfahren, umfassend:
Empfangen, durch ein Benutzergerät, UE (100, 200), von einer Basisstation (200, 100), von Konfigurationsinformationen betreffend eine Vielzahl von Uplink-,UL-,Segmenten betreffend jeden von einer Vielzahl von Synchronisationssignalblock-,SSB-,indizes (S910); und
Durchführen, durch das UE (100, 200), einer wiederholten Übertragung einer Präambel eines physischen Zufallszugriffskanals, PRACH, in einer Periode betreffend ein erstes UL-Segment aus der Vielzahl von UL-Segmenten (S920, S1206),
wobei das erste UL-Segment einem spezifischen SSB-Index entspricht, der von dem UE (100, 200) aus der Vielzahl von SSB-Indizes ausgewählt wird, und
**dadurch gekennzeichnet, dass**, basierend auf einer Signalisierung zum Aktualisieren von Informationen betreffend ein nicht-terrestrisches Netzwerk, NTN, die innerhalb der Periode betreffend das erste UL-Segment von der Basisstation (200, 100) empfangen werden, ein UL-Zeitversatz-,TA-,wert, der auf die wiederholte Übertragung der PRACH-Präambel innerhalb der Periode betreffend das erste UL-Segment angewandt wird, beibehalten wird.

2. Verfahren nach Anspruch 1, wobei:
ein gleicher UL-TA-Wert auf die wiederholte Übertragung der PRACH-Präambel in der Periode betreffend das erste UL-Segment angewandt wird.

3. Verfahren nach Anspruch 1, wobei:
eine spezifische Anzahl von PRACH-Präambeln auf den spezifischen SSB-Index abgebildet wird, und
die spezifische Anzahl von PRACH-Präambeln innerhalb der Periode betreffend das erste UL-Segment wiederholt übertragen wird.

4. Verfahren nach Anspruch 3, wobei:
ein Signal an die Basisstation (200, 100) übertragen wird, um nach einer Änderung der Anzahl von PRACH-Präambeln betreffend den spezifischen SSB-Index anzufragen.

5. Verfahren nach Anspruch 1, wobei:
basierend auf einer Gültigkeitsdauer für die Informationen betreffend das NTN, die während der Periode betreffend das erste UL-Segment abläuft, der UL-TA basierend auf den Information betreffend das NTN beibehalten wird.

6. Verfahren nach Anspruch 1, wobei:
die Vielzahl von UL-Segmenten ein erstes UL-Segment und ein zweites UL-Segment betreffend den spezifischen SSB-Index anschließend an das erste UL-Segment beinhaltet, und
ob ein Parameter für den UL-TA, der in der Periode betreffend das erste UL-Segment verwendet wird, gültig ist, nachdem das erste UL-Segment endet, von dem UE (100, 200) bestimmt wird.

7. Verfahren nach Anspruch 6, wobei:
von der Basisstation (200, 100) eine Zeitlücke zwischen der Periode betreffend das erste UL-Segment und einer Periode betreffend das zweite UL-Segment konfiguriert oder vorkonfiguriert wird.

8. Verfahren nach Anspruch 1, wobei:
die Konfigurationsinformationen von der Basisstation (200, 100) über mindestens eines von Systeminformationsblock-,SIB-, oder
Funkressourcensteuerungs-,RRC-,signalisierung empfangen werden.

9. Endgerät, UE, (100, 200), umfassend:
mindestens einen Sendeempfänger(106, 206);
mindestens einen Prozessor (102, 202), der mit dem mindestens einen Sendeempfänger(106, 206) verbunden ist, wobei der mindestens eine Prozessor (102, 202) konfiguriert ist zum:
Empfangen, von einer Basisstation (200, 100) über den mindestens einen Sendeempfänger (106, 206), von Konfigurationsinformationen betreffend eine Vielzahl von Uplink-,UL-,Segmenten betreffend jeden von einer Vielzahl von Synchronisationssignalblock-,SSB-,indizes (S910); und
Durchführen einer wiederholten Übertragung einer Präambel eines physischen Zufallszugriffskanals, PRACH, in einer Periode betreffend ein erstes UL-Segment aus der Vielzahl von UL-Segmenten (S920, S1206),
wobei das erste UL-Segment einem spezifischen SSB-Index entspricht, der von dem UE (100, 200) aus der Vielzahl von SSB-Indizes ausgewählt wird,
und **dadurch gekennzeichnet, dass**, basierend auf einer Signalisierung zum Aktualisieren von Informationen betreffend ein nicht-terrestrisches Netzwerk, NTN, die innerhalb der Periode betreffend das erste UL-Segment von der Basisstation (200, 100) empfangen werden, ein UL-Zeitversatz-,TA-,wert, der auf die wiederholte Übertragung der PRACH-Präambel innerhalb der Periode betreffend das erste UL-Segment angewandt wird, beibehalten wird.

10. Basisstation (200, 100), umfassend:
mindestens einen Sendeempfänger(106, 206);
mindestens einen Prozessor (102, 202), der mit dem mindestens einen Sendeempfänger(106, 206) verbunden ist, wobei der mindestens eine Prozessor (102, 202) konfiguriert ist zum:
Übertragen, an ein Benutzergerät, UE (100, 200), über den mindestens einen Sendeempfänger (106, 206), von Konfigurationsinformationen betreffend eine Vielzahl von Uplink-,UL-,Segmenten betreffend jeden von einer Vielzahl von Synchronisationssignalblock-,SSB-,indizes (S1010); und
Durchführen eines wiederholten Empfangs einer Präambel eines physischen Zufallszugriffskanals, PRACH, in einer Periode betreffend ein erstes UL-Segment aus der Vielzahl von UL-Segmenten (S1020),
wobei das erste UL-Segment einem spezifischen SSB-Index entspricht, der von dem UE (100, 200) aus der Vielzahl von SSB-Indizes ausgewählt wird, und
und **dadurch gekennzeichnet, dass**, basierend auf einer Signalisierung zum Aktualisieren von Informationen betreffend ein nicht-terrestrisches Netzwerk, NTN, die innerhalb der Periode betreffend das erste UL-Segment von der Basisstation (200, 100) übertragen werden, ein UL-Zeitversatz-,TA-,wert, der auf den wiederholten Empfang der PRACH-Präambel innerhalb der Periode betreffend das erste UL-Segment angewandt wird, beibehalten wird.

## Revendications

1. Procédé comprenant :
la réception, par un équipement utilisateur, UE (100, 200), en provenance d'une station de base (200, 100), d'informations de configuration concernant une pluralité de segments de liaison montante, UL, liés à chacun d'une pluralité d'indices (S910) de bloc de signal de synchronisation, SSB ; et
la réalisation, par l'UE (100, 200), d'une émission répétée d'un préambule de canal physique d'accès aléatoire, PRACH, dans une période liée à un premier segment UL parmi la pluralité de segments UL (S920, S1206) ,
dans lequel le premier segment UL correspond à un indice SSB spécifique sélectionné par l'UE (100, 200) parmi la pluralité d'indices SSB, et
**caractérisé en ce que**, sur la base d'une signalisation pour mettre à jour des informations concernant un réseau non terrestre, NTN, reçues en provenance de la station de base (200, 100) dans la période liée au premier segment UL, une valeur d'avance temporelle, TA, UL appliquée à l'émission répétée du préambule PRACH dans la période liée au premier segment UL est maintenue.

2. Procédé selon la revendication 1, dans lequel :
une même valeur TA UL est appliquée à l'émission répétée du préambule PRACH dans la période relative au premier segment UL.

3. Procédé selon la revendication 1, dans lequel :
un nombre spécifique de préambules PRACH sont mappés sur l'indice SSB spécifique, et
le nombre spécifique de préambules PRACH est émis de manière répétée dans la période liée au premier segment UL.

4. Procédé selon la revendication 3, dans lequel :
un signal est émis vers la station de base (200, 100) pour demander une modification d'un nombre de préambules PRACH liés à l'indice SSB spécifique.

5. Procédé selon la revendication 1, dans lequel :
sur la base d'une durée de validité pour les informations liées au NTN expirant pendant la période liée au premier segment UL, la TA UL basée sur les informations liées au NTN est maintenue.

6. Procédé selon la revendication 1, dans lequel :
la pluralité de segments UL comporte un premier segment UL et un deuxième segment UL associés à l'indice SSB spécifique ultérieur au premier segment UL, et
l'UE (100, 200) détermine si un paramètre pour la TA UL utilisé dans la période associée au premier segment UL est valide ou non après la fin du premier segment UL.

7. Procédé selon la revendication 6, dans lequel :
un intervalle de synchronisation est configuré ou prédéfini par la station de base (200, 100) entre la période associée au premier segment UL et une période liée au deuxième segment UL.

8. Procédé selon la revendication 1, dans lequel :
les informations de configuration sont reçues en provenance de la station de base (200, 100) par l'intermédiaire d'au moins une signalisation de bloc d'information système, SIB, ou commande de ressources radio, RRC.

9. Équipement utilisateur, UE (100, 200), comprenant :
au moins un émetteur-récepteur (106, 206) ; et
au moins un processeur (102, 202) connecté à l'au moins un émetteur-récepteur (106, 206),
dans lequel l'au moins un processeur (102, 202) est configuré pour :
recevoir, en provenance d'une station de base (200, 100) par l'intermédiaire de l'au moins un émetteur-récepteur (106, 206), des informations de configuration liées à une pluralité de segments de liaison montante, UL, liés à chacun d'une pluralité d'indices (S910) de blocs de signal de synchronisation, SSB ; et
réaliser une émission répétée d'un préambule de canal physique d'accès aléatoire, PRACH, dans une période liée à un premier segment UL parmi la pluralité de segments UL (S920, S1206),
dans lequel le premier segment UL correspond à un indice SSB spécifique sélectionné par l'UE (100, 200) parmi la pluralité d'indices SSB,
et **caractérisé en ce que**, sur la base d'une signalisation pour mettre à jour des informations concernant un réseau non terrestre, NTN, reçues en provenance de la station de base (200, 100) dans la période liée au premier segment UL, une valeur d'avance temporelle, TA, UL appliquée à l'émission répétée du préambule PRACH dans la période liée au premier segment UL est maintenue.

10. Station de base (200, 100) comprenant :
au moins un émetteur-récepteur (106, 206) ; et
au moins un processeur (102, 202) connecté à l'au moins un émetteur-récepteur (106, 206),
dans lequel l'au moins un processeur (102, 202) est configuré pour :
émettre, vers un équipement utilisateur, UE, (100, 200) par l'intermédiaire de l'au moins un émetteur-récepteur (106, 206), des informations de configuration liées à une pluralité de segments de liaison montante, UL, liés à chacun d'une pluralité d'indices (S1010) de blocs de signal de synchronisation, SSB ; et
réaliser une réception répétée d'un préambule de canal physique d'accès aléatoire, PRACH, dans une période liée à un premier segment UL parmi la pluralité de segments UL (S1020),
dans lequel le premier segment UL correspond à un indice SSB spécifique sélectionné par l'UE (100, 200) parmi la pluralité d'indices SSB, et
**caractérisé en ce que**, sur la base d'une signalisation pour mettre à jour des informations concernant un réseau non terrestre, NTN, émises en provenance de la station de base (200, 100) dans la période liée au premier segment UL, une valeur d'avance temporelle, TA, UL appliquée à l'émission répétée du préambule PRACH dans la période liée au premier segment UL est maintenue.
